# EUROPEAN PATENT SPECIFICATION

(11) **EP 2 424 383 B1**
(45) Date of publication and mention of the grant of the patent: **17.04.2019**
(21) Application number: 10719954.9
(22) Date of filing: 28.04.2010
(51) Int. Cl.: A23G 4/08, A23G 4/20, A23P 10/35

(54) **GUM BASE, CHEWING GUM COMPRISING THE SAME AND METHOD OF MANUFACTURING THEREOF**
KAUMASSE, KAUGUMMI DIESE ENTHALTEND UND DEREN HERSTELLUNGSVERFAHREN
BASE DE GOMME A MACHER, CHEWING GUM LA COMPRENANT ET LEUR PROCEDE DE PREPARATION

(30) Priority: 29.04.2009 GB 0907351
(43) Date of publication of application: 07.03.2012
(73) Proprietor: Intercontinental Great Brands LLC, East Hanover, NJ 07936 (US)
(72) Inventor: HARRIS, Lawrence, William, Reading RG1 6SW (GB); SOPER, Paul, D,, Beaconsfield Buckinghamshire HP9 2AU (GB); BUFFET, Gaelle Madeleine Claudette, Wokingham RG40 5YH (GB)
(74) Representative: Wilson Gunn
(86) International application number: PCT/GB2010/000846
(87) International publication number: WO 2010/125342

(56) References cited:
- WO-A1-02/076227
- WO-A1-2008/103816
- WO-A2-2008/002337
- US-A- 5 093 387

## Description

The present invention relates to a chewing gum base for use in chewing gum compositions wherein the chewing gum base contributes to the ability of the chewing gum compositions and products to degrade over time after chewing due to environmental influences or cleaning processes, while at the same time providing a significant shelf life for the final chewing gum composition product. Moreover, the invention relates to chewing gum compositions containing such chewing gum bases.

Conventional chewing gum products are not environmentally-friendly. They can maintain stickiness during and after chewing and adhere to the ground or any other surface with which the gum product may come into contact, if care is not taken with regard to disposal of the gum product. This has been a problem for some time as used chewing gum which has been disposed of litters the streets.

The stickiness of such conventional chewing gum products is derived, in a large part, from the use of elastomer solvents (i.e. resins) and other "tacky" ingredients (such as wax) during the manufacturing process.

In particular, conventional chewing gums manufactured using elastomer solvents exhibit a continuous or substantially continuous phase when chewed. As the continuous phase is characterized by an amorphous elastomer matrix containing sticky elastomer solvents, the gum bolus that results upon chewing also is sticky.

Many elastomers, and particularly high molecular weight elastomers (e.g. those with a molecular weight of 200,000 or greater), used in chewing gum compositions are usually solid at room temperature. They are usually purchased as blocks of solid material and generally require softening using solvents to be useful in chewing gum compositions. Softening elastomers in the absence of elastomer solvents is difficult, because the solid elastomer must still be processed into a continuous homogeneous and flowable mass to be useful in chewing gum compositions.

Although gum products that are manufactured without the use of elastomer solvents and/or other "tacky" ingredients have reportedly been developed, such gum products often rely on "non-conventional" gum ingredients to achieve desired properties. U.S. Patent No. 5,882,702, for example, obviates the need for elastomer solvents by replacing elastomers with a plasticized proteinaceous material such as zein. The incorporation of non-conventional ingredients in gum products, however, often compromises taste and thus can be undesirable from a consumer acceptability standpoint.

Moreover, although gum products that allegedly do not stick to teeth and oral prosthetics during mastication are reported (see *e.g.* U.S. Patent No. 4,518,615), there nevertheless remains a need for chewing gum products that also exhibit reduced stickiness or non-stick properties upon disposal of the gum product subsequent to chewing. In particular, there remains a need for environmentally-friendly chewing gum boluses that exhibit either reduced stickiness to, or do not stick to, or are rapidly degraded on, those surfaces where gum boluses that are improperly disposed of are often found (*e.g.* pavements, shoes, hair, undersides of tables and desks).

There was therefore a need for an environmentally-friendly chewing gum base that was capable of degrading in a relatively short period of time. Such bases have been made and comprise an elastomer and a component comprising hydrolysable units, which acts as an agent to degrade the elastomer in the gum base. The gum base is exposed to a condition that promotes hydrolysis, such as chewing. Upon hydrolysis, the surface of the gum base is rendered more hydrophilic, thereby reducing the stickiness of the chewing gum and/or rendering the chewing gum more degradable.

US 2007104829 discloses gum base compositions and chewing gum compositions having non stick or reduced-stick properties and/or increased degradability.

However, it has been found that the shelf life of the gum in such degradable formulations is limited as the ability of the gum to degrade decreases over time. This is due to an ingress of moisture into the agent present in such formulations to degrade the elastomer in the gum base. This moisture reacts with the hydrolysable units in the agent, thus reducing its capacity to degrade the elastomer when the gum is finally chewed as its hydrolysable units have already been reacted before degradation is required.

It would therefore be beneficial to prolong the shelf life of degradable gum formulations by protecting the agent present in such formulations which is capable of degrading the elastomer from exposure to moisture prior to the gum being chewed, while still maintaining the ability of the gum to degrade.

Therefore, in accordance with the present invention there is provided a gum base comprising:
a hydrophilic precursor component comprising hydrolysable units; and
an elastomer;
wherein the hydrophilic precursor component comprising hydrolysable units is encapsulated or dispersed in a barrier material prior to incorporation into the gum base;
wherein the hydrophilic precursor component comprises a polymer or a salt thereof and the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof;
wherein the barrier material is selected from oils or fats, or hydrogenates and emulsions thereof, gum arabic, microcrystalline wax, polyethylene wax, or a polyvinyl acetate/vinyl laurate copolymer; wherein the hydrophilic precursor component having hydrolysable units is present in an amount from about 0.1% by weight to about 10% by weight of the total gum base, and wherein the barrier material is present in a ratio relative to the hydrophilic precursor component of between about 50:50 to 90:10.

The hydrophilic precursor component comprises a polymer or a salt thereof. More than one hydrophilic precursor component may be used.

The polymer is
selected from a copolymer of methyl vinyl ether and maleic anhydride and/or a salt thereof, copolymers of polystyrene and maleic anhydride and/or a salt thereof; polysuccinimide and/or a salt thereof, and combinations thereof, copolymers of vinyl pyrrolidone and vinyl acetate and/or a salt thereof, and alginates and/or a salt thereof. It will be understood that any combination of hydrophilic precursor components and their salts (whether formed before or after formulation) may be used in the present invention.

According to one embodiment of the invention, typical copolymers of methyl vinyl ether and maleic anhydride and/or salts thereof include any of the GANTREZ® AN products and/or salts thereof, including GANTREZ® AN-119 (which has a molecular weight of about 200,000), GANTREZ® AN-903 (which has a molecular weight of about 800,000), GANTREZ® AN-139 (which has a molecular weight of about 1,000,000), and GANTREZ® AN-169 (which has a molecular weight of about 2,000,000). All of these materials are available from International Specialty Products (ISP).

According to one embodiment of the invention, a typical copolymer of vinyl pyrrolidone and vinyl acetate and/or salts thereof is PLASDONE® S-630 (which has a molecular weight of about 27,000), available from International Specialty Products, and/or salts thereof. Other suitable polymers for use as hydrophilic precursor components, including the aforementioned GANTREZ® products, are more particularly described in 'Polymers for Oral Care: Product and Applications Guide", by International Specialty Products ((c) 2003 ISP). Any of the aforementioned polymers and/or any salts thereof may be used alone or in combination.

According to another embodiment of the invention, typical salts of the hydrophilic precursor component include, but are not limited to, any alkali metal salt and/or any alkaline earth metal salt of a hydrophilic precursor component and/or combinations thereof. Particularly useful alkali metal salts include, but are not limited to, the sodium and potassium salts and/or combinations thereof. Particularly useful alkaline earth metal salts of hydrophilic precursor components include, but are not limited to, the magnesium and calcium salts and/or combinations thereof. One typical polymer is GANTREZ® MS, which is a mixed sodium and calcium salt of GANTREZ® S-97, both of which are available from International Specialty Products. Another typical GANTREZ® MS polymer is GANTREZ® MS 995 (which has a molecular weight of about 1,000,000), which also is available from International Specialty Products.

The hydrophilic precursor component may have any suitable molecular weight. Typical molecular weights range from about 200,000 to about 5,000,000, and more typically from about 900,000 to about 5,000,000. In particular, when the hydrophilic precursor component is GANTREZ® AN-119, the molecular weight is typically approximately 200,000. When the polymer is GANTREZ® AN-903, the molecular weight is typically approximately 800,000. When the hydrophilic precursor component is GANTREZ® AN-139, the molecular weight is typically approximately 1,000,000. When the hydrophilic precursor component is GANTREZ® AN-169, the molecular weight is typically approximately 2,000,000. When the hydrophilic precursor component is GANTREZ® S-96, the molecular weight is typically approximately 700,000. When the hydrophilic precursor component is GANTREZ® S-97 powder, the molecular weight is typically approximately 1,200,000. When the hydrophilic precursor component is GANTREZ® S-97 solution, the molecular weight is typically approximately 1,500,000. When the hydrophilic precursor component is GANTREZ® ES-225, the molecular weight is typically approximately from about 100,000 to about 150,000. When the hydrophilic precursor component is GANTREZ® ES-425, the molecular weight is typically approximately from about 90,000 to about 150,000. When the hydrophilic precursor component is GANTREZ® MS, the molecular weight is typically approximately 1,000,000. When the hydrophilic precursor component is PLASDONE® S-630, the molecular weight is typically approximately 27,000.

In general, the at least one agent capable of degrading an elastomer, i.e. the hydrophilic precursor component, is present in an amount sufficient to substantially degrade the chewing gum product subsequent to mastication over time. Typically, in some embodiments, the hydrophilic precursor component is present in an amount sufficient to substantially degrade the chewing gum product subsequent to mastication within about 25 weeks. More typically, the hydrophilic precursor component is present in an amount sufficient to substantially degrade the chewing gum product subsequent to mastication within about 10 weeks.

Typically, a hydrophilic precursor component is present in a chewing gum composition in an amount sufficient to impart reduced stickiness or non-stickiness to the gum base and/or to promote breakdown of the gum base within days and, more typically, within hours upon exposure to a condition that promotes hydrolysis. The hydrophilic precursor component is incorporated in the gum bases in an amount that is from 0.1% by weight to 10% by weight of the total gum base, such as from 0.5, 1.0, 1.5, 2.0, 2.5, 3.0, 3.5, 4.0, 4.5, 5.0, 5.5, 6.0, 6.5, 7.0, 7.5, 8.0, 8.5, 9.0, or 9.5% by weight of the total gum base. More typically, a hydrophilic precursor component is present in the inventive gum bases in an amount that is from 0.5% by weight to 7.5% by weight; still more typically from 1.0% by weight to 5.0% by weight. Most typically, a hydrophilic precursor component is present in the inventive gum bases in an amount that is 1.5% to 5.0% by weight.

In addition to promoting the fragmentation of a chewing gum composition upon exposure to a condition that promotes hydrolysis, the use of hydrophilic precursor component is beneficial from an organoleptic perspective. In particular, by using a hydrophilic precursor component, it is possible to delay the onset of the hydrophilic character of the gum, thereby enabling the gum to have a perceived texture during mastication.

For illustrative purposes only, the concept of the invention will be explained with reference to the hydrophilic precursor component being a GANTREZ® product, *i.e.* a copolymer of methyl vinyl ether and maleic anhydride and/or a salt thereof. This is of course not to be taken in any way as limiting upon the scope of the invention.

The copolymer of methyl vinyl ether and maleic anhydride which is found in the GANTREZ® products has been shown to degrade on the shelf due to its hydrophilic nature. The anhydride functionality of the polymer readily reacts with moisture in the air and is converted into the corresponding acid. As the anhydride units have then reacted on the shelf, the ability of the GANTREZ® products to degrade the gum after it has been chewed is significantly reduced as there are few or no hydrolysable units left on the polymer to fulfil this function. In the case of the GANTREZ®-containing products, providing protection to significantly reduce its ability to absorb moisture prior to any chewing, such that it remains in its anhydride form and does not hydrolyse, is vital. It is the presence of the barrier material which provides this protection, thus prolonging the shelf life of the gum.

As well as protecting the hydrophilic precursor component comprising hydrolysable units from any moisture in the atmosphere, the encapsulation of the hydrophilic precursor component comprising hydrolysable units also protects it from moisture which is inherent in the chewing gum, and also from any reactions or interaction with other components of the chewing gum which may negatively impact upon the degradation efficiency of the chewing gum.

The barrier material are selected from, oils or fats, hydrogenates and emulsions (such as water-in-oil or oil-in-water emulsions) thereof, gum arabic, microcrystalline wax, polyethylene wax, or a polyvinyl acetate/vinyl laurate copolymer (PVAVL). Exemplary barrier materials include hydrogenated rapeseed oil (HRSO), hydrogenated palm oil, HRSO with Carnauba wax, hydrogenated palm oil with Carnauba wax, polyvinyl acetate (PVA). The barrier material may be selected from hydrogenated palm oil with Carnauba wax, or an emulsion of vegetable oil and maltodextrin

According to one embodiment of the invention, the barrier material should not contain any substance which contains a nucleophilic group capable of reacting with the hydrophilic precursor component. Examples of such nucleophilic groups include, but are not limited to, moieties containing one or more oxygen and/or nitrogen atoms such as OH, NH and water. Which nucleophilic groups are capable of reacting with any given hydrophilic precursor component will be readily apparent to a person skilled in this field.

According to another embodiment of the invention, the barrier material may be able to react with the hydrophilic precursor component. In this embodiment, the amount of hydrophilic precursor component in the gum base is typically greater than in the embodiment where the barrier material does not contain any nucleophilic group capable of reacting with the hydrophilic precursor component. The barrier material then reacts with the outer portion of the hydrophilic precursor component only, thus effectively providing a further protective barrier layer between the hydrolysable units in the hydrophilic precursor component and the atmosphere.

The barrier material is present in a ratio relative to the hydrophilic precursor component of between 50:50 to 90:10, more typically between 60:40 and 85:15, still more typically between 70:30 and 80:20, and most typically, there is a ratio of 75:25 for the barrier material relative to the hydrophilic precursor component in the gum base of the invention.

The elastomer (rubber) employed in the gum base may vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums.

Illustrative and non-limiting examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Specific examples of elastomers include polyisobutylene, styrene butadiene rubber, butyl rubber, and combinations thereof.

Additional useful polymers include polybutylmethacrylate/acrylic acid copolymers, polyvinylacetate/vinyl alcohol copolymers, microcrystalline cellulose, sodium carboxymethyl cellulose, hydroxypropylmethyl cellulose, crosslinked cellulose acetate phthalate, crosslinked hydroxymethyl cellulose polymers, zein, crosslinked polyvinyl pyrrolidone, polymethylmethacrylate/acrylic acid copolymers, copolymers of lactic acid, polyhydroxyalkanoates, plasticized ethylcellulose, polyvinyl acetatephthalate and combinations thereof.

In general, the elastomer employed in the gum base may have an average molecular weight of at least about 200,000. Typically, the elastomer employed in the gum base has an average molecular weight from about 200,000 to about 2,000,000.

In some embodiments, it may be particularly useful to include an elastomer composition including a predominant amount of a material selected from polyisobutylene, butyl rubber, butadiene-styrene rubber and combinations thereof, the elastomer composition having an average molecular weight of at least about 200,000. By "predominant" is meant that the composition includes greater than about 50% to about 98% of a material selected from polyisobutylene, butyl rubber, butadiene-styrene rubber and combinations thereof.

The amount of elastomer employed in the gum base may vary depending upon various factors such as the type of gum base used, the consistency of the gum composition desired and the other components used in the composition to make the final chewing gum product. In general, the elastomer may be present in the gum base in an amount from about 1% to about 30% by weight of the gum base. Typically, the elastomer is present in an amount from about 2% to about 15% by weight of the gum base. More typically, the elastomer is present in the gum base in an amount from about 3% to about 10% by weight of the gum base. In some embodiments, the elastomer will be present in the gum base in an amount from about 10% to about 60% by weight, typically from about 35% to about 40% by weight.

As used herein, any reference to a gum composition may include both of a chewing gum composition or a bubble gum composition.

As used herein, the term "barrier material" refers to a material which acts to protect the hydrolysable units of the hydrophilic precursor component from exposure to moisture on standing. The hydrolysable units thus remain unreacted while the gum product is sat on a shelf so that they are still available for their purpose of degrading the gum once they have been exposed to conditions of hydrolysis and the gum has been chewed.

As used herein, the term "degradation" refers to any process whereby a deposited gum cud becomes brittle and begins to breakdown into particles and/or becomes less adhesive, either by the effect of environmental factors including weather conditions such as rain, sun, frost, etc., including cycling weather conditions, and/or by the effect of cleaning processes including the action of detergents. Moreover, as used herein, the term "degradable" refers to the tendency of a deposited gum base to break up in the environment due the effect of weather conditions (rain, sun, frost, etc.), such as cycling weather conditions, and/or through the action of cleaning processes and/or detergents.

As used herein, the phrase "hydrophilic precursor component(s)" refers to any component(s) that is/are capable of promoting hydrolysis and which also has hydrophobic character. Although the hydrophilic precursor component contains a hydrophilic portion (or hydrophilic portions) which allow it to attract water and promote hydrolysis, at least a significant portion of the component is hydrophobic, which allows the component to be readily dispersed in a gum base, and which imparts an overall hydrophobic character.

Moreover, it will be understood that the term hydrophilic precursor component(s) includes hydrophilic precursor component(s) and salts thereof, whether such salts are formed before or after formulation, and any combination thereof. Hydrophilic precursor components include, for example, any component that is capable of hydrolysing during mastication to promote the breakdown of a chewing gum composition and/or to reduce adhesion of a chewing gum composition to a surface, including salts of such components, whether formed before or after formulation. As such, hydrophilic precursor components include any component having at least one hydrolysable unit, including salts of components having at least one hydrolysable unit. Typical salts of components having at least one hydrolysable unit include, for example, alkali metal salts of components having at least one hydrolysable unit and alkaline earth metal salts of components having at least one hydrolysable unit.

As used herein, the term "hydrolysable units" refers to any portion of a molecule that is capable of being hydrolysed. Examples of hydrolysable units include, for example, ester bonds and ether bonds.

As used herein, the phrase "condition that promotes hydrolysis" refers to any condition that causes the hydrolysis of at least one hydrolysable unit. Such conditions include, for example, moisture, mastication in the mouth, and exposure to a hydrolysis-promoting component, and exposure to cycling weather conditions of rain and sunlight.

As used herein, the term "hydrolysis-promoting component" refers to any component that promotes the hydrolysis of a hydrolysable unit. Such components include, for example, any alkaline component having a pH from about 8 to about 14. Examples of hydrolysis-promoting components include, for example, detergents having a basic pH, saliva, rain water, and deionised water. In some embodiments, hydrolysis-promoting components may include filler components such as talc, carbonate-based fillers, such as calcium carbonate, and dical.

As used herein, the term "non-stick and/or increased degradability inducing component(s)" refers to components that are incorporated in a gum composition such that the gum composition exhibits reduced stickiness and/or increased degradability as compared to the same gum composition in the absence of the non-stick inducing components. It will be understood that the term "non-stick and/or increased degradability inducing component(s)" includes non-stick inducing component(s), increased degradability inducing component(s), and component(s) that act both as a non-stick inducing agent and as an increased degradability inducing component. It will be further understood that in some embodiments, the non-stick inducing component may be the same as the increased degradability inducing component, and in some embodiments it may be different.

Typically, the non-stick and/or increased degradability inducing components have a number of advantages, including facilitating the softening of solid elastomer components in the production of a gum base as well as preventing or reducing the tendency of chewing gum compositions and products made therefrom from sticking to surfaces such as packages, teeth, oral prosthetics such as implants and dentures, as well as to concrete, stone, plastic, wood, pavement, brick, glass and various other similar surfaces. The non-stick and/or increased degradability inducing component may be any component that is capable of hydrolysing during mastication to promote breakdown of a chewing gum composition and/or to reduce adhesion of a chewing gum composition to a surface. Moreover, the non-stick and/or increased degradability inducing components may be any component that causes the final (as defined herein) Tg of an elastomer used in a chewing gum composition to change no more than about three degrees, up or down from the initial Tg (as defined herein) during processing. The non-stick and/or increased degradability inducing components also may be any components that serve as a release agent, as defined herein. Moreover, the non-stick and/or increased degradability inducing components may be any components that promote the degradation of a chewing gum composition. In particular, the non-stick and/or increased degradability inducing component may be any component that serves as a hydrophilic precursor component, as defined herein. Furthermore, the non-stick and/or increased degradability components may be any components that crystallize or form domain regions in the gum base elastomers. Additionally, the non-stick and/or increased degradability inducing components may be any components that have a hydrophobic portion and a hydrophilic portion, wherein the hydrophobic portion is capable of orienting inwardly within a gum bolus and the hydrophilic portion is capable of orienting outwardly within a gum bolus. Non-stick and/or increased degradability inducing components include, for example, oils and other fats that may be included in a gum composition in an amount sufficient to render the composition non-sticky, both during processing and after processing of a chewing gum subsequent to chewing of the gum products made therefrom. These non-stick and/or increased degradability inducing components may be used to replace some or all of the elastomer solvent materials, such as resins and waxes conventionally used in chewing gum compositions. The non-stick and/or increased degradability inducing components, when added to a gum base may also act as an elastomer processing aid to permit softening processing of the elastomer from a solid to a useful gum base material.

The chewing gum base containing the same will be less sticky or exhibit less stickiness and/or will exhibit enhanced degradability compared to a chewing gum base not including a non-stick and/or increased degradability inducing component.

The non-stick and/or increased degradability inducing component may be present in amounts of about 10% to about 60%, typically about 20% to about 50%, more typically about 30% to about 40%, by weight of the chewing gum base, typically about 20% to about 50%.

As used herein, the term "Tg" refers to the glass transition temperature of an elastomer used in chewing gum compositions as measured at any time before or after processing of the elastomer. More particularly, the term "Tg initial" refers to the glass transition temperature of an elastomer prior to processing of the elastomer into a substantially homogenous mass in the presence of a non-stick inducing component. The term "Tg final" refers to the glass transition temperature of an elastomer subsequent to processing of the elastomer into a softened mass useful for gum base.

Tg is generally understood to be the temperature below which molecules have very little mobility. On a larger scale, polymers are rigid and brittle below their glass transition temperature and can undergo plastic deformation above it. Tg is usually applicable to amorphous phases and is commonly applicable to glasses, plastics and rubbers. In polymers, Tg is often expressed as the temperature at which the Gibbs free energy is such that the activation energy for the cooperative movement of a significant portion of the polymer is exceeded. This allows molecular chains to slide past each other when a force is applied.

As used herein, the phrase "release properties" means properties that allow a chewing gum base and/or chewing gum product to exhibit reduced adherence to a surface.

As used herein, the phrase "limited capability to plasticize polymers" means that that a component will not change the Tg of a gum base more than about plus/minus three degrees upon incorporation of the component into the gum base.

As used herein, the term "processing" refers to any step taken during the manufacture of a gum base and/or gum product, including any step that occurs when manufacturing a gum product by means of batch systems, continuous systems, or any other system manufacturing system known in the art. As used herein, the term processing includes the process of "masticating an elastomer" so that it is suitable for inclusion in a chewing gum product.

As used herein, the phrase "non-conventional gum ingredients" refers to ingredients not conventionally included in chewing gum products and includes ingredients such as zein and seed oils from the plant genus Cuphea.

As used herein, the phrase "conventional gum ingredients" refers to ingredients traditionally included in gum products such as elastomers and elastomer solvents.

As used herein, the term "surface", when used in connection with non-stick and/or degradable properties, refers to any surface with which a chewing gum base, chewing gum composition, chewing gum product or chewing gum bolus comes into contact. Such surfaces include without limitation, for example, the following: any surface in the oral cavity such as the surface of a tooth or the surface of any dental or orthodontic device contained in the oral cavity; any surface on a human body including the skin, such as the skin on the face, and hair; and any surface external to a human body, such as the surface of pavements, sidewalks, roadways, brick, glass, wood, plastic, stone, furniture, carpeting, the soles of footwear including shoes or sneakers, cardboard, paper, metal, and surfaces of porous nature to which conventional gum ingredients stick and are difficult to remove.

According to further embodiments of the invention, one or more further components may be added to the gum base as desired. These components include but are not limited to a solvent or softener for the elastomer; at least one component selected from a sweetener, a flavour, a sensate and combinations thereof; a texture-modifier; an emulsifier; a plasticizer, a filler/bulking agent; a wax; a hydrophilic, water-absorbing polymer; an antioxidant; a colouring agent; a preservative; photosensitizers; warming and tingling agents; throat-soothing agents; spices; herbs and herbal extracts, tooth-whitening agents; breath-freshening agents; vitamins and minerals; bioactive agents; caffeine; nicotine; or pharmaceutically active agents.

The use of one or more elastomer solvents is not required to masticate the elastomer during the manufacturing process. It may be present in limited amounts, but can lessen the non-stick properties of the gum base of the invention if used in amounts above about 5% by weight of the gum base. In certain embodiments of the invention, elastomer solvents may be used in amounts of about 4% to about 5% by weight of the gum base to provide non-stick properties which are sufficient to provide non-stick properties to teeth, dentures, oral implants and other oral prosthetics.

In some embodiments, the gum base may also contain less than conventional amounts of elastomer solvents to aid in softening the elastomer component. In particular, in some embodiments, such solvents are not required, but may be used in limited amounts along with the non-stick and/or degradability inducing components. By less than conventional amounts is meant that the elastomer solvent is employed in the gum base, for example, in amounts from about 0% to about 5.0% and typically from about 0.1% to about 3.0%, by weight, of the gum base. In some embodiments, the gum base includes a maximum of about 5.0% by weight of an elastomer solvent. In other embodiments, the gum base is free of added elastomer solvents.

In other embodiments, conventional amounts of elastomer solvents are incorporated in the gum bases to aid in softening the elastomer component. Elastomer solvents which may be used include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Further examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof.

Typically, the incorporation of an elastomer solvent in the gum base does not interfere with the non-stick inducing components of the gum base and/or with the ability of the gum base to degrade. In particular, in some embodiments where non-stickiness or reduced stickiness is desired, the elastomer solvent typically softens the gum base without contributing to stickiness. Moreover, the Tg of the gum base typically does not change more than +/- three degrees upon incorporation of the elastomer solvent in the gum base in some embodiments where non-stickiness or reduced stickiness is desired.

Typically, a conventional amount of an elastomer solvent for use in the gum base of the invention may be an amount from about 2.0% to about 15%, more typically from about 5% by weight to about 15% by weight of the gum base, even more typically, in amounts from about 7% by weight of the gum base to about 11% by weight of the gum base.

In some embodiments, the elastomer solvent employed may have at least one hydrophilic portion and at least one hydrophobic portion such that the hydrophilic portion orients inwardly within a gum base and such that the hydrophilic portion orients outwardly within a gum base made from elastomers. Suitable elastomer solvents having at least one hydrophilic portion and at least on hydrophobic portion include, for example, methyl ester liquid rosin. In some embodiments, it is especially useful to incorporate a methyl ester liquid rosin in relatively low amounts. Methyl ester liquid rosin interferes less with the non-stick and/or degradability inducing components as compared to other resins, but yet acts to increase softening of the gum base without contributing to increased stickiness when used in combination with the non-stick inducing component.

Typically, in some embodiments, a methyl ester liquid rosin is incorporated in a gum base in an amount from about 0.5% to about 5.0%, more typically from about 1.0% to about 3.0% by weight of the gum base.

Combinations of any two or more of these components may be used in the gum base of the invention as desired.

The gum base also may include an emulsifier which aids in dispersing the immiscible components of the gum base into a single stable system. The emulsifiers useful in this invention include, but are not limited to, glyceryl monostearate, lecithin, fatty acid monoglycerides, diglycerides, propylene glycol monostearate, and the like, and mixtures thereof. In some embodiments, the emulsifier may be employed in amounts from about 0% to about 50% and, more typically, from about 2% to about 7%, by weight, of the gum base. In other embodiments, the emulsifier may be employed in amounts from about 2% to about 15% and, more typically, from about 7% to about 11% by weight of the gum base.

The gum base also may include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include triacetin (glyceryl triacetate), lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, waxes, and the like, and mixtures thereof. Other softeners include carob, tragacanth, locust bean, and carboxymethyl cellulose. In some embodiments, the aforementioned plasticizers and softeners are generally employed in the gum base in amounts up to about 20% by weight of the gum base, and more typically in amounts from about 2% to about 12%, by weight of the gum base. In other embodiments, the plasticizers and softeners are generally employed in the gum base in amounts up to about 20% by weight of the gum base and, more typically in amounts from about 9% to about 17% by weight of the gum base.

Plasticizers also include hydrogenated vegetable oils, such as soybean oil and cottonseed oils, which may be employed alone or in combination. These plasticizers provide the gum base with good texture and soft chew characteristics. These plasticizers and softeners are generally employed in amount from about 5% to about 14% and, more typically in amounts from about 5% to about 13.5%, by weight, of the gum base.

Typically, the texture-modifier has a molecular weight of at least about 2,000. In some embodiments, the texture-modifier includes a vinyl polymer. Typical texture-modifiers include, but are not limited to, polyvinyl acetate, polyvinyl laurate acetate, polyvinyl alcohol or mixtures thereof.

Typically, the texture-modifier is present in an amount from about 15% to about 70% by weight of the gum base. More typically, the texture-modifier is present in an amount from about 20% to about 60% by weight of the gum base. Most typically, the texture-modifier is present in an amount from about 30% to about 45% by weight of the gum base.

Suitable waxes include, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like. Wax can be present in the gum base in an amount from about 1% to about 15% by weight of the gum base. In some embodiment, when used, the wax is typically present in an amount from about 2% to about 10% by weight of the gum base, more typically in an amount from about 3% to about 8% by weight of the gum base. In other embodiments when wax is used, the wax may be present in the gum base in an amount from about 6% to about 10% and, more typically, from about 7% to about 9.5% by weight of the gum base. In some embodiments, the gum base includes a maximum of about 8% of a wax. In other embodiments, the gum base is free of added wax.

In some embodiments when wax is present, the waxes employed may have a melting point below about 60°C and, more typically, between about 45°C and about 55°C. The wax having a low melting point may be, for example, a paraffin wax. In addition to low melting point waxes, in some embodiments, waxes having a higher melting point may be used in the gum base in amounts up to about 5% by weight of the gum base. Such high melting waxes include, for example, beeswax, vegetable wax, candelilla wax, carnuba wax, most petroleum waxes, and the like and mixtures thereof.

Anhydrous glycerin also may be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention may include one or more fillers or bulking agents that are water-insoluble and/or mineral-based. In particular, the gum base of this invention also may include effective amounts of bulking agents such as mineral adjuvants which may serve as fillers and textural agents. Useful mineral adjuvants include, but are not limited to, calcium carbonate, magnesium carbonate, alumina, aluminium hydroxide, aluminium silicate, talc, starch, tricalcium phosphate, dicalcium phosphate, calcium sulphate, atomite, and the like, and mixtures thereof. These fillers or adjuvants may be used in the gum base compositions in various amounts.

The filler may be present in an amount from about zero to about 60% by weight of the gum base and/or composition and, more specifically, from about zero to about 50% by weight and, even more typically, from about zero to about 40%, by weight, of the gum base and/or chewing gum composition. In some embodiments, the filler may be present in an amount from about 0% by weight to about 30% by weight of the gum base and/or chewing gum composition. Moreover, in some embodiments, the amount of filler will be from about zero to about 15% by weight of the gum base and/or chewing gum composition and, more typically, from about 3% to about 11%, by weight, of the gum base and/or chewing gum composition. In other embodiments, the amount of filler, when used, may be present in an amount from about 15% to about 40% and, typically, from about 20% to about 30% by weight of the gum base.

The filler may be in the gum base, in the chewing gum composition portion or in both the gum base and the chewing gum portion. Without wishing to be bound to any particular theory, it is theorized that the filler creates a matrix that promotes the penetration of the hydrophilic precursor component within the gum base, thereby promoting the hydrolysis and consequent degradation of the gum base upon exposure to a condition that promotes hydrolysis.

In some embodiments, the gum base also may include at least one hydrophilic, water-absorbing polymer to help reduce the stickiness of the gum base and any resultant gum product made from the gum base. Suitable hydrophilic, water-absorbing polymers include the following: native and modified starches; chemically modified cellulose, including methyl cellulose, ethyl cellulose, carboxymethyl cellulose, hydroxypropyl cellulose; gums including xanthan gum, carrageenan gum, guar gum, gum arabic, locust bean gum, curdlan, arabinoxylan, agara, and alginates; and pectin and gelatin.

In general, the at least one hydrophilic, water-absorbing polymer is included in an amount from about 0.1% to about 10% by weight of the gum base. Typically, the at least one hydrophilic, water-absorbing polymer is present in an amount from about 2% to about 8%, more typically from about 3% to about 6%, by weight of the gum base.

In some embodiments, at least one antioxidant may be present in the chewing gum bases. Typically, the antioxidant is water-soluble. Suitable antioxidants include, but are not limited to, butylated hydroxytoluene (BHT), butylated hydroxyanisole (BHA), propyl gallate, vitamin C, vitamin E and mixtures thereof.

When an antioxidant is included in the gum base, the antioxidant is generally present in an amount from about 0.01% to about 0.3%, more typically from about 0.05% to about 0.1%by weight of the gum base. When incorporated in embodiments together with the agent capable of degrading the elastomer, it is desirable to keep the antioxidant down to lower amounts to prevent any interference with free radicals which may be generated by photosensitizers.

Degradability, including biodegradability, is further enhanced by the incorporation of free-radical generators, such as photosensitizers. A particularly useful agent that is capable of enhancing the elastomer degradation in the presence of light is chlorophyll and derivatives such as chlorophyllin, pheophytin, pyropheophytin and pheophorbide. Chlorophyll and its derivatives are capable of absorbing light and generating free radicals. The presence of free radicals may react with elastomer components to render them less sticky.

In general, chlorophyll may be present in an amount from about 0.01% to about 0.3% by weight of the gum base. Typically, chlorophyll may be present in an amount from about 0.05% to about 0.2%, more typically from about 0.07 to about 0.12% by weight of the gum base. Other suitable photosensitizers include, but are not limited to, phthalocyanine derivatives, riboflavin, haemoglobin, myoglobin, and heme.

In some embodiments, the elastomer component may be degraded by oxidation to form smaller discontinuous phases of elastomer. In some embodiments, the elastomer component may interact with free radicals to increase the elastomer molecular weight. When certain elastomer components are used in combination with the chlorophyll, such as elastomers with unsaturated bonds, the chlorophyll may increase the molecular weight of the elastomeric component by inducing higher molecular weight reaction products caused by free radical generation. A variety of reaction possibilities may occur depending on such factors as the type of elastomer present, the amount of degradation agent present such as free-radical inducing agent, the particular chewing gum composition, as well as the type of light and environmental exposure the chewing gum sees.

According to one embodiment of the invention, the hydrophilic precursor component having hydrolysable units typically comprises a copolymer of methyl vinyl ether and maleic anhydride or a salt thereof. The copolymer of methyl vinyl ether and maleic anhydride or a salt thereof is typically one which is currently sold under the Gantrez® trade name.

According to another embodiment of the invention, there is provided a method of preparing a chewing gum composition, comprising the steps of:
providing a gum base including (i) at least one hydrophilic precursor component including hydrolysable units, wherein the hydrophilic precursor component comprises a polymer or a salt thereof and the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof; and (ii) an elastomer, wherein the hydrophilic precursor component comprising hydrolysable units is encapsulated or dispersed in a barrier material prior to incorporation into the gum base, wherein the barrier material is selected from oils or fats, or hydrogenates and emulsions thereof, gum arabic, microcrystalline wax, polyethylene wax, or a polyvinyl acetate/vinyl laurate copolymer; and combining the gum base with at least one component selected from a sweetener, a flavour, a sensate, and combinations thereof, optionally further comprising a step of providing a solvent or softener for the elastomer.

According to another embodiment of the invention, there is provided a method of making a chewing gum base as defined in claim 13.

According to another embodiment of the invention, there is provided the use of a hydrophilic precursor component comprising hydrolysable units, wherein the hydrophilic precursor component comprising hydrolysable units is encapsulated or dispersed in a barrier material prior to incorporation in the gum base,
wherein the hydrophilic precursor component comprises a polymer or a salt thereof and the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof,
and wherein the barrier material is selected from oils or fats, or hydrogenates and emulsions thereof, gum arabic, microcrystalline wax, polyethylene wax, or a polyvinyl acetate/vinyl laurate copolymer, in prolonging the shelf life of a chewing gum composition. Also described herein is a method of increasing the degradability of a chewing gum base as described herein above, comprising:
exposing the chewing gum base to mastication in the oral cavity of an individual; wherein at least one hydrolysable unit of the hydrophilic precursor component begins to hydrolyse or hydrolyses upon mastication in the oral cavity.

Also described herein is a method of increasing the degradability of a gum base as defined herein above, comprising:
exposing the gum base to a source of water; wherein at least one hydrolysable unit of the polymer begins to hydrolyze or hydrolyzes upon contact with the water.

Typically, in the above methods, there is also a step of comprising providing a solvent or softener for the elastomer.

In some embodiments, a chewing gum base according to the invention may be incorporated in a chewing gum composition in an amount from about 5% to about 95%, more typically from about 28% to about 42%, and even more typically from about 28% to about 30% by weight of the total chewing gum composition. In the case of centre-filled chewing gum compositions, this weight percent may be based on the gum region rather than the centre-filled region.

The chewing gum compositions of the invention may include bulk sweeteners such as sugars, sugarless bulk sweeteners, or the like, or mixtures thereof. In some embodiments, bulk sweeteners generally are present in amounts of about 5% to about 99% by weight of the chewing gum composition.

Suitable sugar sweeteners generally include mono-saccharides, di-saccharides and poly-saccharides such as but not limited to, sucrose (sugar), dextrose, maltose, dextrin, xylose, ribose, glucose, mannose, galactose, fructose (levulose), invert sugar, fructo oligo saccharide syrups, partially hydrolysed starch, com syrup solids, isomaltulose, and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythritol, hydrogenated starch hydrolysate, stevia and mixtures thereof.

Suitable hydrogenated starch hydrolysates include those disclosed in U.S. Patent Nos. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Del., also are useful.

The sweetening agents used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. The term "sweetener" or "sweetening agent" as used herein may encompass bulk sweeteners as well as high intensity sweeteners. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Patent No. 4,619,834, which disclosure is incorporated herein by reference, and mixtures thereof;
(b) water-soluble artificial sweeteners such as soluble saccharin salts, *i.e.* sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Patent No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g. chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galactopyranosyl-1,6-dichloro-1,6-dideoxy-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumaoccous danielli (Thaumatin I and II);
(f) the naturally occurring sweetener monatin (2-hydroxy-2-(indol-3-ylmethyl)-4-aminoglutaric acid) and its derivatives; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In general, the sweetener is present in an amount sufficient to provide the level of sweetness desired, and this amount may vary with the sweetener or combination of sweeteners selected. The exact range of amounts for each type of sweetener may be selected by those skilled in the art. In general, a sweetener is present in amounts from about 0.001% to about 3.0% by weight and, more typically, from about 0.01% to about 2.0% by weight of the chewing gum composition.

The chewing gum compositions also may include flavours (i.e. flavourings or flavour agents). Flavours which may be used include those flavours known to the skilled artisan, such as natural and artificial flavours. These flavours may be chosen from synthetic flavour oils and flavouring aromatics and/or oils, oleoresins and extracts derived from plants, leaves, flowers, fruits, and so forth, and combinations thereof. Non-limiting representative flavour oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavourings are artificial, natural and synthetic fruit flavours such as vanilla, and citrus oils including lemon, orange, lime, grapefruit, yazu, sudachi, and fruit essences including apple, pear, peach, grape, strawberry, raspberry, cherry, plum, pineapple, watermelon, apricot, banana, melon, ume, cherry, raspberry, blackberry, tropical fruit, mango, mangosteen, pomegranate, papaya, and so forth.

Other potential flavours include a milk flavour, a butter flavour, a cheese flavour, a cream flavour, and a yogurt flavour; a vanilla flavour; tea or coffee flavours, such as a green tea flavour, a oolong tea flavour, a tea flavour, a cocoa flavour, a chocolate flavour, and a coffee flavour; mint flavours, such as a peppermint flavour, a spearmint flavour, and a Japanese mint flavour; spicy flavours, such as an asafetida flavour, an ajowan flavour, an anise flavour, an angelica flavour, a fennel flavour, an allspice flavour, a cinnamon flavour, a camomile flavour, a mustard flavour, a cardamom flavour, a caraway flavour, a cumin flavour, a clove flavour, a pepper flavour, a coriander flavour, a sassafras flavour, a savoury flavour, a Zanthoxyli Fructus flavour, a perilla flavour, a juniper berry flavour, a ginger flavour, a star anise flavour, a horseradish flavour, a thyme flavour, a tarragon flavour, a dill flavour, a capsicum flavour, a nutmeg flavour, a basil flavour, a marjoram flavour, a rosemary flavour, a bayleaf flavour, and a wasabi (Japanese horseradish) flavour; alcoholic flavours, such as a wine flavour, a whisky flavour, a brandy flavour, a rum flavour, a gin flavour, and a liqueur flavour; floral flavours; and vegetable flavours, such as an onion flavour, a garlic flavour, a cabbage flavour, a carrot flavour, a celery flavour, mushroom flavour, and a tomato flavour. These flavours may be used in liquid or solid form and may be used individually or in admixture. Commonly used flavours include mints such as peppermint, menthol, spearmint, artificial vanilla, cinnamon derivatives, and various fruit flavours, whether employed individually or in admixture.

Other useful flavourings include aldehydes and esters such as cinnamyl acetate, cinnamaldehyde, citral diethylacetal, dihydrocarvyl acetate, eugenyl formate, p-methylamisol, and so forth may be used. Generally any flavouring or food additive 15 such as those described in Chemicals Used in Food Processing, publication 1274, pages 63-258, by the National Academy of Sciences, may be used. Further examples of aldehyde flavourings include but are not limited to acetaldehyde (apple), benzaldehyde (cherry, almond), anisic aldehyde (liquorice,
anise), cinnamic aldehyde (cinnamon), citral, i.e. alpha-citral (lemon, lime), neral, *i.e.* beta-citral (lemon, lime), decanal (orange, lemon), ethyl vanillin (vanilla, cream), heliotrope, *i.e.* piperonal (vanilla, cream), vanillin (vanilla, cream), alpha-amyl cinnamaldehyde (spicy fruity flavours), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e. trans-2 (berry fruits), tolyl aldehyde (cherry, almond), veratraldehyde (vanilla), 2,6-dimethyl-5-heptenal, i.e. melonal (melon), 2,6-dimethyloctanal (green fruit), and 2-dodecenal (citrus, mandarin), cherry, grape, strawberry shortcake, and mixtures thereof.

In some embodiments, the flavour agent may be employed in either liquid form and/or dried form. When employed in the latter form, suitable drying means such as spray drying the oil may be used. Alternatively, the flavour agent may be absorbed onto water-soluble materials, such as cellulose, starch, sugar, maltodextrin, gum arabic and so forth or may be encapsulated. The actual techniques for preparing such dried forms are well-known.

In some embodiments, the flavour agents may be used in many distinct physical forms well-known in the art to provide an initial burst of flavour and/or a prolonged sensation of flavour. Without being limited thereto, such physical forms include free forms, such as spray dried, powdered, beaded forms, encapsulated forms, and mixtures thereof.

The amount of flavour agent employed herein may be a matter of preference subject to such factors as the individual flavour and the strength of flavour desired. Thus, the amount of flavouring may be varied in order to obtain the result desired in the final product and such variations are within the capabilities of those skilled in the art without the need for undue experimentation. In general, the flavour agent is present in amounts from about 0.02% to about 5.0%, more typically from about 0.1% to about 4.0%, and even more typically about 0.8% to about 3.0% by weight of the chewing gum product.

A variety of other traditional ingredients also may be included in the chewing gum products in effective amounts such as colouring agents, antioxidants, preservatives, and the like. Colouring agents may be used in amounts effective to produce the desired colour. The colouring agents may include pigments which may be incorporated in amounts up to about 6% by weight of the composition. For example, titanium dioxide may be incorporated in amounts up to about 2%, typically less than about 1%, by weight of the composition. The colorants may also include natural food colours and dyes suitable for food, drug and cosmetic applications. These colorants are known as F.D. & C. dyes and lakes. The materials acceptable for the foregoing 10 uses are typically water-soluble. Illustrative non-limiting examples include the indigoid dye known as F.D. & C. Blue No. 2, which is the disodium salt of 5,5-indigotindisulfonic acid. Similarly, the dye known as F.D.& C. Green No. 1 comprises a triphenylmethane dye and is the monosodium salt of 4-[4-(N-ethyl-p-sulfoniumbenzylamino)diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopaedia of Chemical Technology, 3rd Edition, in volume 5 at pages 857-884.

With respect to cooling agents, a variety of well-known cooling agents may be employed. For example, among the useful cooling agents are included menthol, xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, 2-isopropanyl-5-methylcyclohexanol, hydroxycarboxylic acids with 2-6 carbon atoms, cyclohexanamides, menthyl acetate, menthyl lactate, methyl salicylate, N,2,3-trimethyl-2-isopropyl butanamide (WS-23), N-ethyl-p-menthane-3-carboxamide (WS-3), menthyl succinate, isopulegol, 3,1-menthoxypropane 1,2-diol, glutarate esters, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, also called "isopregol"); menthone glycerol ketals (FEMA 3807, trade name FRESCOLAT® type MGA); 3-1-menthoxypropane-1,2-diol (from Takasago, FEMA 3784); and menthyl lactate; (from Haarman & Reimer, FEMA 3748, trade name FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others, and combinations thereof. These and other suitable cooling agents are further described in the following U.S. patents, U.S. Patent Nos. 4,230,688 and 4,032,661 to Rowsell et al.; 4,459,425 to Amano et al.; 4,136,163 to Watson et al.; 5,266,592 to Grub et al.; and U.S. Patent No. 6,627,233 to Wolf et al. Cooling agents are generally present in amount of about 0.01% to about 10.0%.

Warming agents may be selected from a wide variety of compounds known to provide the sensory signal of warming to the individual user. These compounds offer the perceived sensation of warmth, particularly in the oral cavity, and often enhance the perception of flavours, sweeteners and other organoleptic components. Useful warming agents include those having at least one allyl vinyl component, which may bind to oral receptors. Examples of suitable warming agents include, but are not limited to: vanillyl alcohol n-butylether (TK-1000, supplied by Takasago Perfumery Company Ltd., Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; isoamylalcohol; benzyl alcohol; glycerine; chloroform; eugenol; cinnamon oil; cinnamic aldehyde; phosphate derivatives thereof; and combinations thereof.

Tingling agents may provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; black pepper extract (piper nigrum), including the active ingredients chavicine and piperine; Echinacea extract; Northern Prickly Ash extract; and red pepper oleoresin. In some embodiments, alkylamides extracted from materials such as jambu or sanshool may be included. Additionally, in some embodiments, a sensation is created due to effervescence. Such effervescence is created by combining an alkaline material with an acidic material, either or both of which may be encapsulated. In some embodiments, an alkaline material may include alkali metal carbonates, alkali metal bicarbonates, alkaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Patent No. 6,780,443. Tingling agents are described in U.S. Patent No. 6,780,443 to Nakatsu et al., U.S. Patent No. 5,407,665 to McLaughlin et al., U.S. Patent No. 6,159,509 to Johnson et al. and U.S. Patent No. 5,545,424 to Nakatsu et al.

The sensation of warming or cooling effects may be prolonged with the use of a hydrophobic sweetener as described in U.S. Patent Publication 2003/0072842 A1 to Johnson et al. For example, such hydrophobic sweeteners include those of the formulae I-XI referenced therein. Perillartine may also be added as described in U.S. Patent No. 6,159,509.

Breath-freshening agents, in addition to the flavours and cooling agents described hereinabove, may include a variety of compositions with odour-controlling properties. Such breath-freshening agents may include, without limitation, cyclodextrin and magnolia bark extract. The breath-freshening agents may further be encapsulated to provide a prolonged breath-freshening effect. Examples of malodour-controlling compositions are included in U.S. Patent No. 5,300,305 to Stapler et al. and in U.S. Patent Publication Nos. 2003/0215417 and 2004/0081713.

A variety of oral care products also may be included in some embodiments of the instant chewing gum compositions. Such oral care products may include tooth whiteners, stain removers, anti-calculus agents, and anti-plaque agents. Oral care agents that may be used include those actives known to the skilled artisan, such as, but not limited to, surfactants, breath-freshening agents, anti-microbial agents, antibacterial agents, oral malodour control agents, fluoride compounds, quaternary ammonium compounds, remineralisation agents and combinations thereof. Examples of these include, but are not limited to hydrolytic agents including proteolytic enzymes, abrasives such as hydrated silica, calcium carbonate, sodium bicarbonate and alumina, other active stain-removing components such as surface-active agents, such as anionic surfactants such as sodium stearate, sodium palminate, sulphated butyl oleate, sodium oleate, salts of fumaric acid, glycerol, hydroxylated lecithin, sodium lauryl sulphate and chelators such as polyphosphates, which are typically employed in dentifrice compositions as tartar control ingredients. Also included are tetrasodium pyrophosphate and sodium tri-polyphosphate, sodium tripolyphosphate, xylitol, hexametaphosphate, and an abrasive silica. Further examples are included in the following U.S. Patents: U.S. Patent Nos. 5,227,154 to Reynolds, 5,378,131 to Greenberg and 6,685,916 to Holme et al. Suitable oral care actives such as remineralisation agents, antimicrobials, and tooth-whitening agents are described in assignee's co-pending U.S. patent publication 2010/061941, filed Jul. 29, 2004 and entitled "Tooth-Whitening Compositions and Delivery Systems Therefor", and the like, and mixtures thereof.

A variety of drugs, including medications, herbs, and nutritional supplements may also be included in the chewing gum compositions. Examples of useful drugs include ace-inhibitors, antianginal drugs, anti-arrhythmias, anti-asthmatics, anti-cholesterolemics, analgesics, anaesthetics, anti-convulsants, anti-depressants, antidiabetic agents, anti-diarrhoea preparations, antidotes, anti-histamines, anti-hypertensive drugs, anti-inflammatory agents, anti-lipid agents, anti-manics, antinauseants, anti-stroke agents, anti-thyroid preparations, anti-tumour drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra®, fertility agents, gastrointestinal agents, homeopathic remedies, hormones, hypocalcaemia and hypocalcaemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumour drugs, anti-coagulants, anti-thrombotic drugs, hypnotics, anti-emetics, antinauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in the present inventive chewing gum compositions include antacids, H2-antagonists, and analgesics. For example, antacid dosages can be prepared using the ingredients calcium carbonate alone or in combination with magnesium hydroxide, and/or aluminium hydroxide. Moreover, antacids can be used in combination with H2-antagonists.

Analgesics include opiates and opiate derivatives, such as Oxycontin, ibuprofen, aspirin, acetaminophen, and combinations thereof that may optionally include caffeine.

Other drug ingredients for use in embodiments include anti-diarrhoeals such as immodium AD, anti-histamines, anti-tussives, decongestants, vitamins, and breath-fresheners. Also contemplated for use herein are anxiolytics such as Xanax; anti-psychotics such as clozaril and Haldol; non-steroidal anti-inflammatories (NSAIDs) such as ibuprofen, naproxen sodium, Voltaren and Lodine, anti-histamines such as Claritin, Hismanal, Relafen, and Tavist; anti-emetics such as Kytril and Cesamet; bronchodilators such as Bentolin, Proventil; anti-depressants such as Prozac, Zoloft, and Paxil; anti-migraines such as Imigra, ACE-inhibitors such as Vasotec, Capoten and Zestril; anti-Alzheimer's agents, such as Nicergoline; and CaH-antagonists such as Procardia, Adalat, and Calan.

Moreover, some embodiments of chewing gum compositions can include H2-antagonists. Examples of suitable H2-antagonist include cimetidine, ranitidine hydrochloride, famotidine, nizatidien, ebrotidine, mifentidine, roxatidine, pisatidine and aceroxatidine.

Active antacid ingredients include, but are not limited to, the following: aluminium hydroxide, dihydroxyaluminium aminoacetate, aminoacetic acid, aluminium phosphate, dihydroxyaluminium sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulphate, magaldrate, magnesium aluminosilicate, magnesium carbonate, magnesium glycinate, magnesium hydroxide, magnesium oxide, magnesium trisilicate, milk solids, aluminium mono-ordibasic calcium phosphate, tricalcium phosphate, potassium bicarbonate, sodium tartrate, sodium bicarbonate, magnesium aluminosilicates, tartaric acids and salts thereof.

A variety of other nutritional supplements also may be included in the gum compositions. Virtually any vitamin or mineral may be included. For example, vitamin A, vitamin C, vitamin D, vitamin E, vitamin K, vitamin B6, vitamin B12, thiamine, riboflavin, biotin, folic acid, niacin, pantothenic acid, sodium, potassium, calcium, magnesium, phosphorus, sulphur, chlorine, iron, copper, iodine, zinc, selenium, manganese, choline, chromium, molybdenum, fluorine, cobalt and combinations thereof, may be used.

Examples of nutritional supplements are set forth in U.S. Patent Publication Nos. 2003/0157213 A1, 2003/0206993 and 2003/0099741 A1.

Various herbs also may be included such as those with various medicinal or dietary supplement properties. Herbs are generally aromatic plants or plant parts that can be used medicinally or for flavouring. Suitable herbs can be used singly or in various mixtures. Commonly used herbs include Echinacea, Goldenseal, Calendula, Aloe, Blood Root, Grapefruit Seed Extract, Black Cohosh, Cranberry, Ginko Biloba, St. John's Wort, Evening Primrose Oil, Yohimbe Bark, Green Tea, Maca, Bilberry, Lutein, and combinations thereof.

Acidulants also may be included in the chewing gum compositions. Suitable acidulants include, for example, malic acid, adipic acid, citric acid, tartaric acid, fumaric acid, and mixtures thereof.

Any of the aforementioned additives for use in a chewing gum composition, as well as other conventional additives known to one having ordinary skill in the art, such as thickeners, may be incorporated into the chewing gum base of the chewing gum compositions or any coating that the chewing gum product may contain.

The chewing gum compositions of the present invention may be formed into a variety of shapes and sizes and may take various product forms, including without limitation, sticks, slabs, chunks, balls, pillows, tablet, pellet, centre-filled, pressed tablet, deposited, compressed chewing gum or any other suitable format, as well as coated and uncoated forms.

When the chewing gum compositions are formed into coated products, the coating may be applied by any method known in the art. The coating composition may be present in an amount from about 2% to about 60%, more typically from about 25% to about 35%, or still more typically from about 25% to about 45%, and even more specifically, in an amount of about 30% by weight of the gum piece.

Such coated chewing gums are typically referred to as pellet gums. The outer coating may be hard or crunchy. Any suitable coating materials known to those skilled in the art may be employed. Typically, the outer coating may include sorbitol, maltitol, xylitol, isomalt, erythritol, isomalt, and other crystallisable polyols; sucrose may also be used. Furthermore, the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include coloured flakes or speckles. If the composition includes a coating, it is possible that one or more oral care actives can be dispersed throughout the coating. This is especially typical if one or more oral care actives are incompatible in a single phase composition with another of the actives. Flavours may also be added to yield unique product characteristics.

In the case of centre-filled chewing gum products, the coating may also be formulated to assist with increasing the thermal stability of the gum piece and preventing leaking of the liquid fill. In some embodiments, the coating may include a gelatin composition. The gelatin composition may be added as a 40% by weight solution and may be present in the coating composition from about 5% to about 10% by weight of the coating composition, and more typically about 7% to about 8%. The gel strength of the gelatin may be from about 130 bloom to about 250 bloom.

Other materials may be added to the coating to achieve desired properties. These materials may include without limitations, cellulosics such as carboxymethyl cellulose, gelatin, pullulan, alginate, starch, carrageenan, xanthan gum, gum arabic and PVA.

The coating composition may also include a pre-coating which is added to the individual gum pieces prior to an optional hard coating. The pre-coating may include an application of PVA. This may be applied as a solution of PVA in a solvent, such as ethyl alcohol. When an outer hard coating is desired, the PVA application may be approximately 3% to 4% by weight of the total coating or about 1% of the total weight of the gum piece (including a liquid-fill, gum region and hard coating).

Some embodiments extend to methods of processing an elastomer in a gum base. In particular, some embodiments extend to methods of processing an elastomer for use in a gum base without substantially changing the Tg of the gum base as measured by differential scanning calorimetry (DSC). Such methods include the step of mixing at least one elastomer and at least one fat.

Differential scanning calorimetry (DSC) is a thermoanalytical technique in which the difference in the amount of heat required to increase the temperature of a sample and reference are measured as a function of temperature. The basic principle underlying this technique is that, when the sample undergoes a physical transformation such as phase transitions, more (or less) heat will need to flow to it than the reference to maintain both at the same temperature. Whether more or less heat must flow to the sample depends on whether the process is exothermic or endothermic. For example, as a solid sample melts to a liquid it will require more heat flowing to the sample to increase its temperature at the same rate as the reference. This is due to the absorption of heat by the sample as it undergoes the endothermic phase transition from solid to liquid. Likewise, as the sample undergoes exothermic processes (such as crystallization) less heat is required to raise the sample temperature. By observing the difference in heat flow between the sample and reference, differential scanning calorimeters are able to measure the amount of energy absorbed or released during such transitions. DSC is used to observe more subtle phase changes, such as glass transitions.

Other embodiments extend to methods of processing a solid elastomer that include: providing a solid elastomer composition suitable for use in a chewing gum base and combining with the solid elastomer composition a non-stick and/or degradability inducing component including at least one fat having an HLB range of about 3.5 to about 13. In such methods, the non-stick and/or degradability inducing component is present in amounts sufficient to permit mastication of the solid elastomer composition into a homogenous mass.

In some embodiments, the above-described methods of processing an elastomer are carried out in the presence of very low amounts of elastomer solvent. In such embodiments, the elastomer solvent includes a maximum of about 5.0% of any gum base made by masticating an elastomer as described above.

In other embodiments, the above-described methods of processing an elastomer are carried out in the absence of added elastomer solvent.

In additional embodiments, the methods of making a chewing gum base include processing an elastomer for use in a gum base without substantially changing the Tg of the gum base as measured by DSC by mixing at least one elastomer and at least one fat or oil.

Moreover, in further embodiments, the methods of making a chewing gum base include providing a solid elastomer composition suitable for use in a chewing gum base and combining with the solid elastomer composition a non-stick and/or degradability inducing component that includes at least one fat or oil having an HLB range of about 3.5 to about 13. In such methods, the non-stick and/or degradability inducing component is present in amounts sufficient to permit processing of the solid elastomer composition into a softened, processable mass.

In some embodiments, the above-described methods of making a gum base may be carried out in the presence of lower than conventional amounts of elastomer solvent. In such embodiments, the elastomer solvent includes a maximum of about 5.0% of the gum base. Typically, an elastomer solvent can be mixed with an elastomer and non-stick and/or degradability inducing component to soften the elastomer without causing the resultant chewing gum base to become sticky.

In other embodiments, the above-described methods of making a gum base are carried out in the absence of added elastomer solvent.

The manner in which the gum base components are mixed is not critical and such mixing is performed using standard apparatuses known to those skilled in the art. In a typical method, at least one elastomer is admixed with at least one mastication processing aid, which for purposes of the invention includes one or more hydrophilic precursor component comprising hydrolysable units, and agitated for a period of from about 1 to about 30 minutes. The remaining ingredients, such as the texture-modifier and/or softener are then admixed, either in bulk or incrementally, while the gum base mixture is blended again for about 1 to about 30 minutes.

The products may be prepared using standard techniques and equipment known to those skilled in the art, which processes generally involve melting the gum base, incorporating the desired ingredients while mixing and forming the batch into individual chewing gum pieces. The apparatus useful in accordance with the embodiments described herein includes mixing and heating apparatuses well-known in the chewing gum manufacturing arts, and therefore the selection of the specific apparatus will be apparent to the artisan. For general chewing gum preparation processes which are useful in some embodiments see U.S. Patent Nos. 4,271,197 to Hopkins et al., 4,352,822 to Cherukuri et al. and 4,497,832 to Cherukuri et al. For instance, centre-fill chewing gum embodiments may include a centre-fill region, which may be a liquid or powder or other solid, and a gum region. Some embodiments also may include an outer gum coating or shell, which typically provides a crunchiness to the piece when initially chewed. The outer coating or shell may at least partially surround the gum region. Centre-fill chewing gums and methods of preparing same are more fully described in assignee's co-pending U.S. patent publication No. 2006/0051456, filed on Aug. 24, 2004 entitled "Liquid-Filled Chewing Gum Composition".

Some other chewing gum embodiments may be in a compressed gum format, such as, for example, a pressed tablet gum. Such embodiments may include a particulate chewing gum base, which may include a compressible gum base composition and a tableting powder.

In some embodiments the gum base is also free of added waxes.

The features and advantages of the present invention are more fully shown by the following examples which are provided for purposes of illustration, and are not to be construed as limiting the invention in any way.

### EXAMPLES - SET 1

### Example 1: Dispersion of Gantrez® with m a vegetable oil and maltodextrin emulsion:

50 g of Gantrez® in an anhydride form was dispersed in 110 g of vegetable oil using a hand held kitchen mixer. This suspension was slowly poured into a solution of 200 g of maltodextrin (Roquette IT 19) in 400 g of water whilst employing shear from a kitchen mixer. 2.5 g of gum arabic was used as an emulsifier.

The resulting oil-in-water emulsion was fed into the spray drier with an inlet temperature of 192°C and an outlet temperature of 97°C. An off-white powder was produced.

### Example 2: Preparation of a sample of Gantrez® encapsulated in hydrogenated rapeseed oil:

The encapsulation of the hydrogenated rapeseed oil is carried out using a spray cooling method. The Gantrez® is suspended in a quantity of molten fat and sheared to give a homogenous dispersion. The molten suspension is then atomised into a cold chamber which causes the fat coating to solidify, generating the encapsulated Gantrez®.

### Example 3: Preparation of a sample of Gantrez® encapsulated in PVA:

42 g of PVA B100 was melted at 100°C, and then 18 g of anhydride were added to the molten PVA and mixed for 10 minutes using a 65 cc Brabender mixer to ensure good dispersion. The molten PVA/anhydride mass was sheeted using a rubber mile (Brabender). Once cooled to room temperature, the sheet was ground into finer particles.

The products were analysed by Fourier Transform IR (FTIR) spectroscopy, which confirmed the presence of Gantrez® anhydride. They were also analysed by optical spectroscopy to determine the physical form of the encapsulate; this confirmed that the products contained encapsulated particles of Gantrez®.

The products were tested for efficacy at time = 0 (*i. e.* immediately after production) by incorporating them into separate batches of a standard Trident® soft peppermint gum recipe. They were added at a level to give a final Gantrez® content of 1.5% w/w in the final gum based upon predicted encapsulate loadings of 10% for the emulsion encapsulate.

The gum samples were cut into 1.9 g pieces and chewed for 30 minutes. Chewed cuds were then assessed for efficacy using the following methods:
Water bath: Chewed cuds were placed in 50 ml of de-ionised water in a number of conical flasks. The flasks were placed in a shaking water bath set at 50°C and 100 shakes per minute.

pH 12: Chewed cuds were placed in a 50 ml sterilin pot with 30 ml of a ph 12 buffer solution and left to stand for the duration of the test.

Cuds were assessed every hour for 9 hours and then again after 24 hours. The extent of degradation was assessed visually against the scale as detailed below:
0 - no break down
1 - very, very slight break down
2 - very slight break down
3 - slight break down
4 - breaking down
5 - very broken down
6 - almost fully broken down
7 - fully broken down

Greenhouse - Chewed cuds were deposited on a flooring tile. The tile was placed in a polyethylene tunnel in a greenhouse and subject to regular spraying with water. Cuds were assessed at regular intervals and the extent of degradation was assessed visually against the scale as detailed below:
0 - no break down
1 - swelling to form a doughnut shape
2 - swelling throughout the cud
3 - maximum expansion and foaming
4 - degradation and cracking
5 - removal of gum surface
6 - complete removal of gum

The products were also tested for degradation efficacy after they had been stored for a period of 4 weeks from their production. One set of samples had been stored at 18°C at ambient humidity and the other at 37°C at a relative humidity of 74%.

### RESULTS

### 1) Emulsion of Example 1, time = 0 (water bath):

**Table 1**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 0 | 0 | 0 | 0 | 0 | 1 | 3 | 3 | 3 | 7 |
| Cud 2 Score | 0 | 0 | 0 | 0 | 0 | 0 | 1 | 2 | 2 | 2 | 7 |

Emulsion, time = 0 (pH 12):

**Table 2**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 0 | 0 | 1 | 1 | 2 | 2 | 2 | 3 | 3 | 6 |
| Cud 2 Score | 0 | 0 | 0 | 1 | 1 | 1 | 1 | 2 | 2 | 2 | 6 |

Greenhouse - after 2 weeks in the greenhouse a degradation score of 2 was achieved.

Emulsion, after storage for 4 weeks at 18°C at ambient humidity (water bath):

**Table 3**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 1 | 1 | 2 | 3 | 3 | 3 | 3 | 3 | 4 | 5 |
| Cud 2 Score | 0 | 1 | 1 | 2 | 2 | 2 | 2.5 | 3 | 3 | 3 | 6 |

Emulsion, after storage for 4 weeks at 18°C at ambient humidity (pH 12):

**Table 4**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 0 | 0 | 0 | 2 | 3 | 4 | 4 | 4 | 4 | 6 |
| Cud 2 Score | 0 | 0 | 0 | 0 | 2 | 3 | 3 | 3 | 4 | 4 | 3 |

Greenhouse - after 2 weeks in the greenhouse a degradation score of 3 was achieved.

Emulsion, after storage for 4 weeks at 37°C at a relative humidity of 74% (water bath):

**Table 5**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 0 | 2 | 3 | 4 | 4 | 4 | 4 | 4 | 4 | 5 |
| Cud 2 Score | 0 | 1 | 2 | 5 | 7 | 7 | 7 | 7 | 7 | 7 | 7 |

Greenhouse - after 2 weeks in the greenhouse a degradation score of 2 was achieved.

### 2) Hydrogenated rapeseed oil encapsulated Gantrez®, time = 0 (water bath):

**Table 6**

| Time (hrs) | 1 | 2 | 3 | 4 | 5 | 6 | 7 | 8 | 9 |
|---|---|---|---|---|---|---|---|---|---|
| Cud 1 Score | 3 | 3 | 3 | 3 | 3 | 3 | 4 | 4 | 4 |
| Cud 2 Score | 4 | 4 | 5 | 5 | 5 | 5 | 5 | 5 | 5 |

Hydrogenated rapeseed oil encapsulated Gantrez®, time = 0 (pH 12):

**Table 7**

| Time (hrs) | 1 | 2 | 3 | 4 | 5 | 6 | 7 | 8 | 9 |
|---|---|---|---|---|---|---|---|---|---|
| Cud 1 Score | 4 | 4 | 4 | 4 | 4 | 4 | 5 | 5 | 5 |
| Cud 2 Score | 4 | 4 | 4 | 4 | 4 | 5 | 5 | 5 | 5 |

Greenhouse - after 2 weeks in the greenhouse a degradation score of 2 was achieved.

Hydrogenated rapeseed oil encapsulated Gantrez®, after storage for 4 weeks at 18°C at ambient humidity (water bath):

**Table 8**

| Time (hrs) | 1 | 2 | 3 | 4 | 5 | 6 | 7 | 8 | 9 |
|---|---|---|---|---|---|---|---|---|---|
| Cud 1 Score | 2 | 2 | 2 | 3 | 3 | 3 | 3 | 3 | 3 |
| Cud 2 Score | 3 | 3 | 3 | 4 | 4 | 4 | 4 | 4 | 5 |

Hydrogenated rapeseed oil encapsulated Gantrez®, after storage for 4 weeks at 18°C at ambient humidity (pH 12):

**Table 9**

| Time (hrs) | 1 | 2 | 3 | 4 | 5 | 6 | 7 | 8 | 9 |
|---|---|---|---|---|---|---|---|---|---|
| Cud 1 Score | 1 | 1 | 1 | 1 | 1 | 1 | 2 | 2 | 2 |
| Cud 2 Score | 1 | 1 | 1 | 1 | 1 | 1 | 1 | 2 | 2 |

Greenhouse - after 2 weeks in the greenhouse a degradation score of 2 was achieved.

### 3) PVA encapsulated Gantrez®, time = 0 (water bath):

**Table 10**

| Time (hrs) | 1 | 2 | 3 | 4 | 5 | 6 | 7 | 8 | 9 |
|---|---|---|---|---|---|---|---|---|---|
| Cud 1 Score | 6 | 6 | 7 | 7 | 7 | 7 | 7 | 7 | 7 |
| Cud 2 Score | 5 | 5 | 5 | 5 | 5 | 7 | 7 | 7 | 7 |

PVA encapsulated Gantrez®, time = 0 (pH 12):

**Table 11**

| Time (hrs) | 1 | 2 | 3 | 4 | 5 | 6 | 7 | 8 | 9 |
|---|---|---|---|---|---|---|---|---|---|
| Cud 1 Score | 4 | 4 | 4 | 4 | 4 | 4 | 5 | 5 | 5 |
| Cud 2 Score | 4 | 4 | 4 | 4 | 4 | 4 | 5 | 5 | 5 |

Greenhouse - after 2 weeks in the greenhouse a degradation score of 3 was achieved.

PVA encapsulated Gantrez®, after storage for 4 weeks at 18°C at ambient humidity (water bath):

**Table 12**

| Time (hrs) | 1 | 2 | 3 | 4 | 5 | 6 | 7 | 8 | 9 |
|---|---|---|---|---|---|---|---|---|---|
| Cud 1 Score | 6 | 6 | 6 | 6 | 6 | 6 | 6 | 6 | 6 |
| Cud 2 Score | 3 | 4 | 4 | 4 | 4 | 4 | 4 | 4 | 4 |

PVA encapsulated Gantrez®, after storage for 4 weeks at 18°C at ambient humidity (pH 12):

**Table 13**

| Time (hrs) | 1 | 2 | 3 | 4 | 5 | 6 | 7 | 8 | 9 |
|---|---|---|---|---|---|---|---|---|---|
| Cud 1 Score | 3 | 3 | 3 | 4 | 4 | 4 | 5 | 5 | 5 |
| Cud 2 Score | 3 | 3 | 3 | 4 | 4 | 4 | 5 | 5 | 5 |

Greenhouse - after 2 weeks in the greenhouse a degradation score of 3 was achieved.

PVA encapsulated Gantrez®, after storage for 4 weeks at 37°C at a relative humidity of 74% (water bath):

**Table 14**

| Time (hrs) | 1 | 2 | 3 | 4 | 5 | 6 | 7 | 8 | 9 |
|---|---|---|---|---|---|---|---|---|---|
| Cud 1 Score | 0 | 1 | 1 | 2 | 2 | 3 | 4 | 4 | 4 |
| Cud 2 Score | 0 | 1 | 1 | 2 | 2 | 3 | 4 | 4 | 4 |

Greenhouse - after 2 weeks in the greenhouse a degradation score of 2 was achieved.

### Comparative Examples

Un-encapsulated control samples containing Gantrez®:
Time = 0; Water bath:

**Table 19**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 4 | 4 | 4 | 5 | 5 | 5 | 5 | 7 | 7 | 7 |
| Cud 2 Score | 0 | 3 | 3 | 4 | 4 | 4 | 4 | 4 | 5 | 5 | 7 |

Time = 0; pH 12:

**Table 20**

| Time (hrs) | 0 | 1 | 2 | 3 | 4 | 5 | 6 | 7 | 8 | 9 | 24 |
|---|---|---|---|---|---|---|---|---|---|---|---|
| Cud 1 Score | 0 | 3 | 3 | 3 | 3 | 4 | 4 | 4 | 4 | 4 | 6 |
| Cud 2 Score | 0 | 1 | 2 | 3 | 3 | 4 | 4 | 4 | 4 | 4 | 6 |

Greenhouse - after 2 weeks in the greenhouse a degradation score of 3 was achieved.

Un-encapsulated sample, after storage for 4 weeks at 18°C at ambient humidity (water bath):

**Table 21**

| Time (hrs) | 1 | 2 | 3 | 4 | 5 | 6 | 7 | 8 | 9 | 24 |
|---|---|---|---|---|---|---|---|---|---|---|
| Cud 1 Score | 0 | 0 | 0 | 0 | 0 | 0 | 0 | 0 | 0 | 0 |
| Cud 2 Score | 0 | 0 | 0 | 0 | 0 | 0 | 0 | 0 | 0 | 0 |

Un-encapsulated sample, after storage for 4 weeks at 18°C at ambient humidity (pH 12):

**Table 22**

| Time (hrs) | 1 | 2 | 3 | 4 | 5 | 6 | 7 | 8 | 9 | 24 |
|---|---|---|---|---|---|---|---|---|---|---|
| Cud 1 Score | 0 | 0 | 0 | 0 | 0 | 0 | 0 | 0 | 0 | 0 |
| Cud 2 Score | 0 | 0 | 0 | 0 | 0 | 0 | 0 | 0 | 0 | 0 |

Greenhouse - after 2 weeks in the greenhouse a degradation score of 1 was achieved.

Un-encapsulated sample, after storage for 4 weeks at 37°C at a relative humidity of 74% (water bath):

**Table 23**

| Time (hrs) | 1 | 2 | 3 | 4 | 5 | 6 | 7 | 8 | 9 | 24 |
|---|---|---|---|---|---|---|---|---|---|---|
| Cud 1 Score | 0 | 0 | 0 | 0 | 0 | 0 | 0 | 0 | 0 | 0 |
| Cud 2 Score | 0 | 0 | 0 | 0 | 0 | 0 | 0 | 0 | 0 | 0 |

Un-encapsulated sample, after storage for 4 weeks at 37°C at a relative humidity of 74% (pH 12):

**Table 24**

| Time (hrs) | 1 | 2 | 3 | 4 | 5 | 6 | 7 | 8 | 9 | 24 |
|---|---|---|---|---|---|---|---|---|---|---|
| Cud 1 Score | 0 | 0 | 0 | 0 | 0 | 0 | 0 | 0 | 0 | 0 |
| Cud 2 Score | 0 | 0 | 0 | 0 | 0 | 0 | 0 | 0 | 0 | 0 |

Greenhouse - after 2 weeks in the greenhouse a degradation score of 1 was achieved.

It can therefore be seen in the Comparative Example that while the un-encapsulated Gantrez® is amenable to degradation in the few hours immediately after its production, storage of the gum for a period of 4 weeks before carrying out the same experiment results in a decreased degradation efficacy. This may be attributable to the hydrolysable units in the Gantrez® being prematurely hydrolysed, rendering them useless for purpose after a period of time standing. Such samples thus have a finite and short shelf life.

In contrast, it can be seen that all of the other samples did show degradation ability even after 4 weeks of storage.

Specifically, at time = 0 in a water bath, the emulsion encapsulated samples showed no initial degradation until the 6 hour point, after which they reached total degradation within 24 hours.

At time = 0 at pH 12, the emulsion encapsulated samples showed no initial degradation until the 3 hour point, after which they near reached total degradation within 24 hours. The total degradation efficiency immediately after manufacture is thus comparable to that of the non-encapsulated samples. However, it is after the period of standing where the advantages of the invention are clear.

Even after standing for 4 weeks at 18°C, when exposed to the water bath and pH 12 conditions, the emulsion encapsulated samples showed clear degradation efficiency and proceeded to near total degradation within 24 hours.

After standing for 4 weeks at 37°C, when exposed to the water bath conditions, the emulsion encapsulated samples showed clear degradation efficiency and proceeded to total degradation within 24 hours.

Similarly, at time = 0 when exposed to the water bath and pH 12 conditions, the hydrogenated rapeseed oil encapsulated samples proceeded to an almost completely broken down state within 9 hours. In comparison with the emulsion encapsulated samples after 9 hours, it can be said that the hydrogenated rapeseed oil encapsulated samples would have reached total degradation within 24 hours.

After standing for 4 weeks at 18°C, when exposed to the water bath, they showed clear degradation efficiency and proceeded to a very broken down state within 9 hours. In comparison with the emulsion encapsulated samples after 9 hours, it can be estimated that the hydrogenated rapeseed oil encapsulated samples would have reached total degradation within 24 hours.

For the PVA encapsulated samples, at time = 0 when exposed to the water bath and pH 12 conditions, they showed a clear degradation efficiency and proceeded within 9 hours to a completely degraded state when exposed to the water bath conditions and to a very broken down state when exposed to the pH 12 conditions.

After standing for 4 weeks at 18°C, when exposed to the water bath conditions, the PVA encapsulated samples showed clear degradation efficiency and proceeded to an almost fully broken down state within 9 hours. Again, in comparison with the emulsion encapsulated samples after 9 hours, it can be said that the hydrogenated rapeseed oil encapsulated samples would have reached total degradation within 24 hours.

After standing for 4 weeks at 37°C, when exposed to the water bath conditions, the PVA encapsulated samples showed clear degradation efficiency and had begun to break down within 9 hours.

### EXAMPLES - SET 2

Four different chewing gum samples were assessed for their degradation efficacy. The results are presented in Table 25 below.

The batch labelled "Control" is normal Trident tropical twist chewing gum which contains no Gantrez.

The batch labelled "Un-encapsulated Gantrez" is normal Trident tropical twist chewing gum which contains 1.5% w/w Gantrez anhydride.

The batch labelled "Gantrez encapsulated with Rapeseed oil and carnauba wax" is normal Trident tropical twist chewing gum which contains a final concentration of 1.5% w/w Gantrez anhydride.

The batch labelled "Gantrez encapsulated with Polyethylene wax" is normal Trident tropical twist chewing gum which contains a final concentration of 1.5% w/w Gantrez anhydride.

The two encapsulates both contain 25% w/w Gantrez and 75% w/w encapsulating material. The Rapeseed oil/carnauba wax encapsulate is a core-shell encapsulate (having an inner core of Gantrez together with a complete outer layer of Rapeseed oil/carnauba wax). The Polyethylene wax encapsulate is a matrix encapsulate (multiple inner cores of Gantrez contained within a particle of polyethylene wax, some Gantrez will be exposed at the surface).

Each batch was packaged into full commercial packaging (*i.e*. a cardboard carton containing 14 paper wrapped sticks, wrapped with polythene, 12 of these cartons then being packaged into a secondary cardboard box with a second polythene wrapping).

The gum was then stored at 30°C at 80% relative humidity for a total of 16 weeks. 12 weeks under these conditions is considered to be representative of 12 month's storage under ambient conditions.

The gum was sampled at intervals of 4, 8, 12, 14 and 16 weeks and tested for degradation efficacy. For each batch of gum 6 sticks were chewed for 30 minutes. The chewed gum was then placed onto a concrete slab. The slab was then stood in a shallow depth of water (the water was below the upper surface of the slab so as not to submerge it). The gum was then sprayed with a small quantity of water on a daily basis for 7 days. The extent of cud degradation was assessed after seven days. A score of 0 indicates no degradation, while a score of 4 indicates complete degradation. Scores of 2 and 3 indicate intermediate levels of degradation.

The testing was carried out at two separate sites under identical conditions.

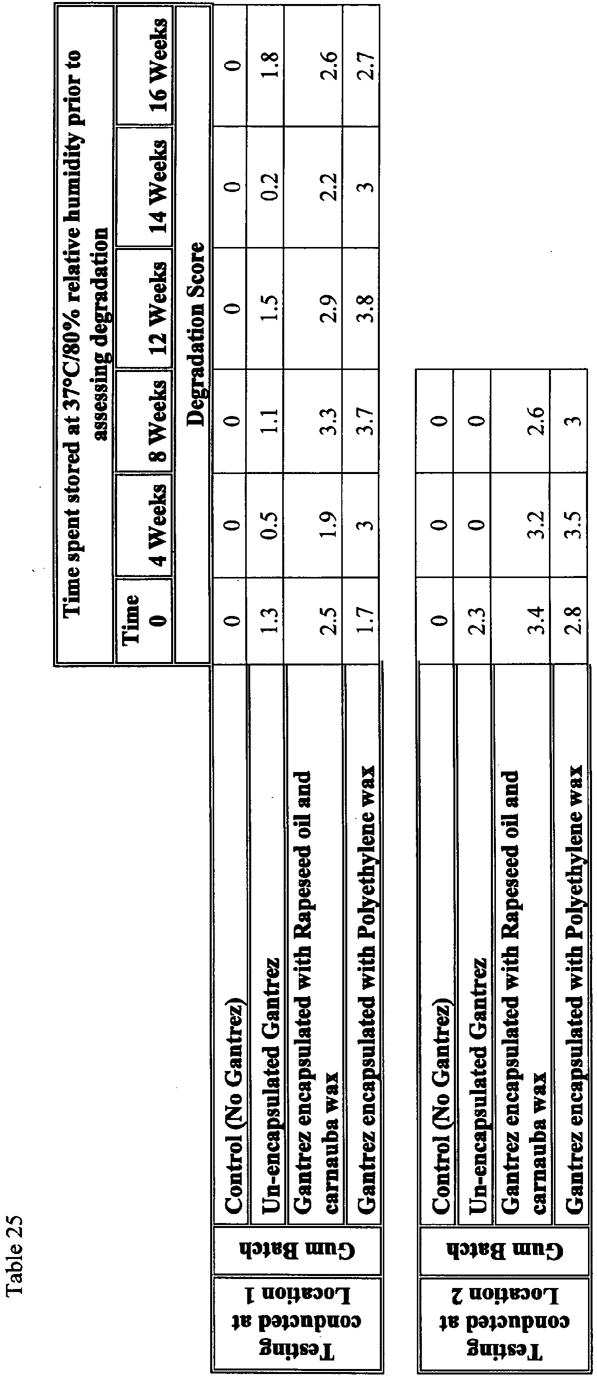

It can be seen in the results that the control sample containing no Gantrez shows no degradation characteristics whatsoever in either test, while encapsulation with both Rapeseed oil/carnauba wax and with Polyethylene wax results in vastly improved retention of product degradation efficacy over an extended shelf life period.

These results thus clearly demonstrate that the gum bases of the invention, with the agent providing the degradation ability being protected from moisture from the atmosphere and moisture inherent in the gum, and also protected from any reactions or interaction with other components of the chewing gum, by encapsulation or dispersed in a barrier material, are capable of providing the degradation ability desired for the chewing gums, while simultaneously improving the shelf life of such chewing gum products.

It is of course to be understood that the present invention is not intended to be restricted to the foregoing examples which are described by way of example only.

## Claims

1. A gum base comprising:
a) a hydrophilic precursor component comprising hydrolysable units; and
b) an elastomer;
wherein the hydrophilic precursor component comprising hydrolysable units is encapsulated or dispersed in a barrier material prior to incorporation into the gum base; wherein the hydrophilic precursor component comprises a polymer or a salt thereof and the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof;
wherein the barrier material is selected from oils or fats, or hydrogenates and emulsions thereof, gum arabic, microcrystalline wax, polyethylene wax, or a polyvinyl acetate/vinyl laurate copolymer; wherein the hydrophilic precursor component having hydrolysable units is present in an amount from 0.1 % by weight to 10% by weight of the total gum base, and wherein the barrier material is present in a ratio relative to the hydrophilic precursor component of between 50:50 to 90:10.

2. A gum base according to claim 1, wherein the barrier material does not have a nucleophilic group capable of reacting with the hydrolysable units of the hydrophilic precursor component, wherein the nucleophilic group capable of reacting with the hydrolysable units of the hydrophilic precursor component is optionally selected from moieties containing one or more oxygen and/or nitrogen atoms; optionally wherein the nucleophilic group comprising an OH or NH moiety.

3. A gum base according to claim 1 or claim 2, wherein the elastomer is present in amount of about 5% by weight to about 95% by weight of the total composition, and/or wherein the elastomer is selected from polyisobutylene, butyl rubber, styrene-butadienestyrene rubber, and combinations thereof.

4. A gum base according to any preceding claim, further including at least one component selected from a sweetener, a flavour, a sensate and combinations thereof; a texture-modifier; a solvent or softener for the elastomer; an emulsifier; a plasticizer, a filler/bulking agent; a wax; a hydrophilic, water-absorbing polymer; an antioxidant; a colouring agent; a preservative; photosensitizers; warming and tingling agents; throat-soothing agents; spices; herbs and herbal extracts, tooth-whitening agents; breath-freshening agents; vitamins and minerals; bioactive agents; caffeine; nicotine; pharmaceutically active agents.

5. A gum base according to any preceding claim, further including at least one component which promotes hydrolysis, which is optionally an alkaline component or a filler component, wherein the gum base degrades faster in the presence of the at least one component that promotes hydrolysis than in the absence of the at least one component which promotes hydrolysis.

6. A gum base according to any preceding claim wherein the barrier material is selected from hydrogenated rape seed oil (HRSO), hydrogenated palm oil, HRSO with Carnauba wax, hydrogenated palm oil with Carnauba wax, polyvinyl acetate (PVA), microcrystalline wax, polyethylene wax, a polyvinyl acetate/vinyl laurate copolymer, or an emulsion of vegetable oil and maltodextrin.

7. A gum base composition according to any preceding claim, wherein the barrier material is selected from hydrogenated palm oil with Carnauba wax, or an emulsion of vegetable oil and maltodextrin.

8. A gum base composition according to any preceding claim, wherein the barrier material is an emulsion.

9. A gum base composition according to claim 1, wherein the barrier material possesses a nucleophilic group capable of reacting with the hydrolysable units of the hydrophilic precursor component, wherein the barrier material is optionally able to react with an outer layer of the hydrophilic precursor component comprising hydrolysable units to form a layer comprising a reaction product of the barrier material and the outer layer of the hydrophilic precursor component, between the barrier material and the hydrophilic precursor component.

10. A gum base composition according to claim 9, wherein the barrier material is gum arabic.

11. A gum base composition according to any preceding claim, wherein the hydrolysable unit is selected from the group consisting of an ester bond or an ether bond, and/or wherein the hydrophilic precursor component has a molecular weight in the range of about 10,000 to about 5,000,000.

12. A gum base composition according to any preceding claim, wherein the salt of the polymer comprising hydrolysable units is optionally selected from an alkali metal salt or an alkaline earth metal salt.

13. A method of preparing a gum base, comprising the steps of:
a) providing at least one hydrophilic precursor component including hydrolysable units, wherein the hydrophilic precursor component comprises a polymer or a salt thereof and the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof;
b) encapsulating or dispersing the hydrophilic precursor component comprising hydrolysable units in a barrier material, wherein the barrier material is selected from oils or fats, or hydrogenates and emulsions thereof, gum arabic, microcrystalline wax, polyethylene wax, or a polyvinyl acetate/vinyl laurate copolymer; and
c) mixing the encapsulated or dispersed hydrophilic precursor component with an elastomer,
d) optionally further comprising a step of providing a solvent or softener for the elastomer.

14. A method of preparing a chewing gum composition, comprising the steps of:
a) providing a gum base including (i) at least one hydrophilic precursor component including hydrolysable units, wherein the hydrophilic precursor component comprises a polymer or a salt thereof and the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof; and (ii) an elastomer, wherein the hydrophilic precursor component comprising hydrolysable units is encapsulated or dispersed in a barrier material prior to incorporation into the gum base, wherein the barrier material is selected from oils or fats, or hydrogenates and emulsions thereof, gum arabic, microcrystalline wax, polyethylene wax, or a polyvinyl acetate/vinyl laurate copolymer; and
b) combining the gum base with at least one component selected from a sweetener, a flavour, a sensate, and combinations thereof,
c) optionally further comprising a step of providing a solvent or softener for the elastomer.

15. Use of a hydrophilic precursor component comprising hydrolysable units, wherein the hydrophilic precursor component comprising hydrolysable units is encapsulated or dispersed in a barrier material prior to incorporation in the gum base,
wherein the hydrophilic precursor component comprises a polymer or a salt thereof and
the polymer is selected from a copolymer of methyl vinyl ether and maleic anhydride and/or a salt thereof; copolymers of polystyrene and maleic anhydride and/or a salt thereof; polysuccinimide and/or a salt thereof, copolymers of vinylpyrrolidone and vinyl acetate and/or a salt thereof, and alginates and/or a salt thereof,
and wherein the barrier material is selected from oils or fats, or hydrogenates and emulsions thereof, gum arabic, microcrystalline wax, polyethylene wax, or a polyvinyl acetate/vinyl laurate copolymer, in prolonging the shelf life of a chewing gum composition.

16. A chewing gum composition comprising a gum base according to any of claims 1 - 12, wherein said gum base or chewing gum composition has increased degradability and/or reduced-stick properties in the presence of the salt of the polymer comprising hydrolysable units as compared to in the absence of the salt of the polymer comprising hydrolysable units.

## Patentansprüche

1. Kaugummi-Grundmasse, umfassend:
a) eine hydrophile Vorläuferkomponente, die hydrolysierbare Einheiten umfasst; und
b) ein Elastomer;
wobei die hydrophile Vorläuferkomponente, die hydrolysierbare Einheiten umfasst, in einem Barrierematerial eingekapselt oder dispergiert wird, bevor sie in die Kaugummi-Grundmasse eingebracht wird;
wobei die hydrophile Vorläuferkomponente ein Polymer oder ein Salz davon umfasst, und das Polymer aus einem Copolymer von Methylvinylether und Maleinsäureanhydrid und/oder einem Salz davon; Copolymeren von Polystyrol und Maleinsäureanhydrid und/oder einem Salz davon; Polysuccinimid und/oder einem Salz davon, Copolymeren von Vinylpyrrolidon und Vinylacetat und/oder einem Salz davon, und Alginaten und/oder einem Salz davon ausgewählt ist;
wobei das Barrierematerial aus Ölen oder Fetten, oder Hydrogenaten und Emulsionen davon, Gummi arabicum, mikrokristallinem Wachs, Polyethylenwachs, oder einem Polyvinylacetat/Vinyllaurat-Copolymer ausgewählt ist; wobei die hydrophile Vorläuferkomponente, die hydrolysierbare Einheiten aufweist, in einer Menge von 0,1 Gew.-% bis 10 Gew.-% der gesamten Kaugummi-Grundmasse vorliegt, und wobei das Barrierematerial in einem Verhältnis relativ zu der hydrophilen Vorläuferkomponente von zwischen 50:50 bis 90:10 vorliegt.

2. Kaugummi-Grundmasse nach Anspruch 1, wobei das Barrierematerial keine nukleophile Gruppe aufweist, die in der Lage ist, mit den hydrolysierbaren Einheiten der hydrophilen Vorläuferkomponente zu reagieren, wobei die nukleophile Gruppe, die in der Lage ist, mit den hydrolysierbaren Einheiten der hydrophilen Vorläuferkomponente zu reagieren, optional aus Teileinheiten ausgewählt ist, die ein oder mehrere Sauerstoff- und/oder Stickstoffatome enthalten; wobei die nukleophile Gruppe optional eine OH- oder NH-Teileinheit aufweist.

3. Kaugummi-Grundmasse nach Anspruch 1 oder Anspruch 2, wobei das Elastomer in einer Menge von etwa 5 Gew.-% bis etwa 95 Gew.-% der gesamten Zusammensetzung vorliegt, und/oder wobei das Elastomer aus Polyisobutylen, Butylkautschuk, Styrol-Butadien-Styrol-Kautschuk und Kombinationen davon ausgewählt ist.

4. Kaugummi-Grundmasse nach einem der vorhergehenden Ansprüche, wobei sie ferner zumindest eine Komponente umfasst, die aus einem Süßstoff, einem Geschmacksstoff, einem Wahrnehmungsstoff und Kombinationen davon; einem Texturmodifikator; einem Lösungsmittel oder Weichmacher für das Elastomer; einem Emulgator; einem Plastifiziermittel, einem Füllmittel/Füllstoff; einem Wachs; einem hydrophilen, wasserabsorbierenden Polymer; einem Antioxidans, einem Farbstoff; einem Konservierungsmittel; Photosensibilisatoren; wärmenden und prickelnden Wirkstoffen; halsberuhigenden Wirkstoffen; Gewürzen; Kräutern und Kräuterextrakten, zahnaufhellenden Wirkstoffen; atemerfrischenden Wirkstoffen; Vitaminen und Mineralstoffen; bioaktiven Wirkstoffen; Koffein; Nikotin; pharmazeutisch aktiven Wirkstoffen ausgewählt ist.

5. Kaugummi-Grundmasse nach einem der vorhergehenden Ansprüche, wobei sie ferner zumindest eine Komponente enthält, welche die Hydrolyse fördert und optional eine alkalische Komponente oder eine Füllstoffkomponente ist, wobei die Kaugummi-Grundmasse in Anwesenheit der zumindest einen Komponente, welche die Hydrolyse fördert, schneller abgebaut wird als in Abwesenheit der zumindest einen Komponente, welche die Hydrolyse fördert.

6. Kaugummi-Grundmasse nach einem der vorhergehenden Ansprüche, wobei das Barrierematerial aus gehärtetem Rapsöl (HRSO), gehärtetem Palmöl, HRSO mit Carnauba-Wachs, gehärtetem Palmöl mit Carnauba-Wachs, Polyvinylacetat (PVA), mikrokristallinem Wachs, Polyethylen-Wachs, einem Polyvinylacetat/Vinyllaurat-Copolymer, oder einer Emulsion aus Pflanzenöl und Maltodextrin ausgewählt ist.

7. Kaugummi-Grundmassen-Zusammensetzung nach einem der vorhergehenden Ansprüche, wobei das Barrierematerial aus gehärtetem Palmöl mit Carnauba-Wachs oder einer Emulsion aus Pflanzenöl und Maltodextrin ausgewählt ist.

8. Kaugummi-Grundmassen-Zusammensetzung nach einem der vorhergehenden Ansprüche, wobei das Barrierematerial eine Emulsion ist.

9. Kaugummi-Grundmassen-Zusammensetzung nach Anspruch 1, wobei das Barrierematerial eine nukleophile Gruppe besitzt, die in der Lage ist, mit den hydrolysierbaren Einheiten der hydrophilen Vorläuferkomponente zu reagieren, wobei das Barrierematerial optional in der Lage ist, mit einer äußeren Schicht der hydrophilen Vorläuferkomponente, die hydrolysierbare Einheiten umfasst, zu reagieren, um zwischen dem Barrierematerial und der hydrophilen Vorläuferkomponente eine Schicht zu bilden, die ein Reaktionsprodukt des Barrierematerials und der äußeren Schicht der hydrophilen Vorläuferkomponente umfasst.

10. Kaugummi-Grundmassen-Zusammensetzung nach Anspruch 9, wobei das Barrierematerial Gummi arabicum ist.

11. Kaugummi-Grundmassen-Zusammensetzung nach einem der vorhergehenden Ansprüche, wobei die hydrolysierbare Einheit aus der Gruppe bestehend aus einer Esterbindung oder einer Etherbindung ausgewählt ist, und/oder wobei die hydrophile Vorläuferkomponente ein Molekulargewicht in dem Bereich von etwa 10.000 bis etwa 5.000.000 aufweist.

12. Kaugummi-Grundmassen-Zusammensetzung nach einem der vorhergehenden Ansprüche, wobei das Salz des Polymers, das hydrolysierbare Einheiten umfasst, optional aus einem Alkalimetallsalz oder einem Erdalkalimetallsalz ausgewählt ist.

13. Verfahren zur Herstellung einer Kaugummi-Grundmasse, das die folgenden Schritte umfasst:
a) Bereitstellen zumindest einer hydrophilen Vorläuferkomponente, die hydrolysierbare Einheiten enthält, wobei die hydrophile Vorläuferkomponente ein Polymer oder ein Salz davon umfasst, und das Polymer aus einem Copolymer von Methylvinylether und Maleinsäureanhydrid und/oder einem Salz davon; Copolymeren von Polystyrol und Maleinsäureanhydrid und/oder einem Salz davon; Polysuccinimid und/oder einem Salz davon, Copolymeren von Vinylpyrrolidon und Vinylacetat und/oder einem Salz davon, und Alginaten und/oder einem Salz davon ausgewählt ist;
b) Einkapseln oder Dispergieren der hydrophilen Vorläuferkomponente, die hydrolysierbare Einheiten umfasst, in einem Barrierematerial, wobei das Barrierematerial aus Ölen oder Fetten, oder Hydrogenaten und Emulsionen davon, Gummi arabicum, mikrokristallinem Wachs, Polyethylenwachs, oder einem Polyvinylacetat/Vinyllaurat-Copolymer ausgewählt ist; und
c) Mischen der eingekapselten oder dispergierten hydrophilen Vorläuferkomponente mit einem Elastomer,
d) optional ferner umfassend einen Schritt zur Bereitstellung eines Lösungsmittels oder Weichmachers für das Elastomer.

14. Verfahren zur Herstellung einer Kaugummi-Zusammensetzung, das die folgenden Schritte umfasst:
a) Bereitstellen einer Kaugummi-Grundmasse, die umfasst: (i) zumindest eine hydrophile Vorläuferkomponente, die hydrolysierbare Einheiten enthält, wobei die hydrophile Vorläuferkomponente ein Polymer oder ein Salz davon umfasst, und das Polymer aus einem Copolymer von Methylvinylether und Maleinsäureanhydrid und/oder einem Salz davon; Copolymeren von Polystyrol und Maleinsäureanhydrid und/oder einem Salz davon; Polysuccinimid und/oder einem Salz davon, Copolymeren von Vinylpyrrolidon und Vinylacetat und/oder einem Salz davon, und Alginaten und/oder einem Salz davon ausgewählt ist; und (ii) ein Elastomer, wobei die hydrophile Vorläuferkomponente umfassend hydrolysierbare Einheiten in einem Barrierematerial vor ihrem Einbringen in die Kaugummigrundmasse eingekapselt oder dispergiert wird, wobei das Barrierematerial aus Ölen oder Fetten, oder Hydrogenaten und Emulsionen davon, Gummi arabicum, mikrokristallinem Wachs, Polyethylenwachs, oder einem Polyvinylacetat/Vinyllaurat-Copolymer ausgewählt ist; und
b) Kombinieren der Kaugummi-Grundmasse mit zumindest einer Komponente, die aus einem Süßstoff, einem Geschmacksstoff, einem Wahrnehmungsstoff und Kombinationen davon ausgewählt ist,
c) optional ferner umfassend einen Schritt zur Bereitstellung eines Lösungsmittels oder Weichmachers für das Elastomer.

15. Verwendung einer hydrophilen Vorläuferkomponente, die hydrolysierbare Einheiten umfasst, wobei die hydrophile Vorläuferkomponente, die hydrolysierbare Einheiten umfasst, vor ihrem Einbringen in die Kaugummi-Grundmasse in einem Barrierematerial eingekapselt oder dispergiert wird, wobei die hydrophile Vorläuferkomponente ein Polymer oder ein Salz davon umfasst, und das Polymer aus einem Copolymer von Methylvinylether und Maleinsäureanhydrid und/oder einem Salz davon ausgewählt ist; Copolymeren von Polystyrol und Maleinsäureanhydrid und/oder einem Salz davon; Polysuccinimid und/oder einem Salz davon, Copolymeren von Vinylpyrrolidon und Vinylacetat und/oder einem Salz davon, und Alginaten und/oder einem Salz davon ausgewählt ist,
und wobei das Barrierematerial aus Ölen oder Fetten, oder Hydrogenaten und Emulsionen davon, Gummi arabicum, mikrokristallinem Wachs, Polyethylenwachs, oder einem Polyvinylacetat/Vinyllaurat-Copolymer ausgewählt ist,
zur Verlängerung der Haltbarkeit einer Kaugummi-Zusammensetzung.

16. Kaugummi-Zusammensetzung, umfassend eine Kaugummi-Grundmasse nach einem der Ansprüche 1 bis 12, wobei die Kaugummi-Grundmasse oder Kaugummi-Zusammensetzung in Anwesenheit des Salzes des Polymers, das hydrolysierbare Einheiten umfasst, eine verbesserte Abbaubarkeit und/oder verringerte Haftungseigenschaften aufweist als bei Abwesenheit des Salzes des Polymers, das hydrolysierbare Einheiten umfasst.

## Revendications

1. Base de gomme comprenant :
a) un constituant précurseur hydrophile comprenant des motifs hydrolysables et
b) un élastomère ;
dans laquelle le constituant précurseur hydrophile comprenant des motifs hydrolysables est enrobé ou dispersé dans une matière formant barrière avant incorporation à la base de gomme ;
dans laquelle le constituant précurseur hydrophile comprend un polymère ou l'un de ses sels et le polymère est choisi parmi un copolymère d'oxyde méthylvinylique et d'anhydride maléique et/ou l'un de ses sels, des copolymères de polystyrène et d'anhydride maléique et/ou de l'un de leurs sels, du polysuccinimide et/ou l'un de ses sels, des copolymères de vinylpyrrolidone et d'acétate de vinyle et/ou de l'un de leur sels et des alginates et/ou de l'un de leurs sels,
dans laquelle la matière formant barrière est choisie parmi des huiles ou des matières grasses ou leurs produits d'hydrogénation et leurs émulsions, la gomme arabique, la cire microcristalline, la cire de polyéthylène ou un copolymère de poly(acétate de vinyle/laurate de vinyle) ; dans laquelle le constituant précurseur hydrophile ayant des motifs hydrolysables est présent en une quantité représentant de 0,1% en poids à 10% en poids de la base de gomme totale et dans laquelle la matière formant barrière est présente en un rapport, par rapport au constituant précurseur hydrophile, compris entre 50:50 et 90:10.

2. Base de gomme suivant la revendication 1, dans laquelle la matière formant barrière n'a pas de groupe nucléophile apte à réagir sur les motifs hydrolysables du constituant précurseur hydrophile, le groupe nucléophile apte à réagir sur les motifs hydrolysables du constituant précurseur hydrophile étant choisi éventuellement parmi des radicaux contenant un ou plusieurs atomes d'oxygène et/ou d'azote ; dans laquelle, éventuellement, le groupe nucléophile comprend un radical OH ou NH.

3. Base de gomme suivant la revendication 1 ou la revendication 2, dans laquelle l'élastomère est présent en une quantité représentant d'environ 5% à environ 95% du poids de la composition totale et/ou dans laquelle l'élastomère est choisi parmi le polyisolbutylène, le caoutchouc butyl, le caoutchouc styrène-butadiène-styrène et leurs combinaisons.

4. Base de gomme suivant l'une quelconque des revendications précédentes, comprenant, en outre, un composant choisi parmi un édulcorant, un aromatisant, un agent donnant une sensation et leurs combinaisons ; un agent modifiant la texture, un solvant ou un plastifiant de l'élastomère ; un émulsionnant ; un plastifiant, une charge/agent donnant du corps ; une cire ; un polymère hydrophile absorbant l'eau ; un antioxydant ; un colorant ; un conservateur ; des photosensibilisateurs ; des agents chauffant et donnant une teinte ; des agents adoucissant la gorge ; des épices ; des tisanes et des extraits végétaux, des agents de blanchissement des dents ; des agents rafraîchissant l'haleine ; des vitamines et des minéraux ; des agents bioactifs ; de la caféine ; de la nicotine ; des agents actifs pharmaceutiquement.

5. Base de gomme suivant l'une quelconque des revendications précédentes, comprenant, en outre, au moins un constituant qui favorise l'hydrolyse, qui est, éventuellement, un constituant alcalin ou un constituant de charge, dans laquelle la base de gomme se dégrade plus rapidement en la présence du au moins un constituant qui favorise l'hydrolyse qu'en l'absence du au moins un constituant qui favorise l'hydrolyse.

6. Base de gomme suivant l'une quelconque des revendications précédentes, dans laquelle la matière formant barrière est choisie parmi l'huile de graine de colza hydrogénée (HRSO), l'huile de palme hydrogénée, HRSO avec de la cire de carnauba, l'huile de palme hydrogénée avec de la cire de carnauba, du poly(acétate de vinyle) (PVA), de la cire microcristalline, de la cire polyéthylénée, un copolymère de poly(acétate de vinyle/laurate de vinyle) ou une émulsion d'huile végétale et de maltodextrine.

7. Composition à base de gomme suivant l'une quelconque des revendications précédentes, dans laquelle la matière formant barrière est choisie parmi l'huile de palme hydrogénée avec de la cire de carnauba ou une émulsion d'huile végétale et de la maltodextrine.

8. Composition à base de gomme suivant l'une quelconque des revendications précédentes, dans laquelle la matière formant barrière est une émulsion.

9. Composition à base de gomme suivant la revendication 1, dans laquelle la matière formant barrière possède un groupe nucléophile apte à réagir sur les motifs hydrolysables du constituant précurseur hydrophile, dans laquelle la matière formant barrière est apte, éventuellement, à réagir sur une couche extérieure du constituant précurseur hydrophile, comprenant des motifs hydrolysables pour former une couche, comprenant un produit de réaction de la matière formant barrière et de la couche extérieure du constituant précurseur hydrophile entre la matière formant barrière et le constituant précurseur hydrophile.

10. Composition à base de gomme suivant la revendication 9, dans laquelle la matière formant barrière est de la gomme arabique.

11. Composition à base de gomme suivant l'une quelconque des revendications précédentes, dans laquelle le motif hydrolysable est choisi dans le groupe consistant en une liaison ester ou en une liaison éther-oxyde et/ou dans laquelle le constituant précurseur hydrophile a un poids moléculaire dans la plage d'environ 10 000 à environ 5 000 000.

12. Composition à base de gomme suivant l'une quelconque des revendications précédentes, dans laquelle le sel du polymère comprenant des motifs hydrolysables est choisi, éventuellement, parmi un sel de métal alcalin ou un sel de métal alcalinoterreux.

13. Procédé de préparation d'une base de gomme, comprenant les stades, dans lesquels :
a) on se procure au moins un constituant précurseur hydrophile comprenant des motifs hydrolysables, le constituant précurseur hydrophile comprenant un polymère ou l'un de ses sels et le polymère étant choisi parmi un copolymère d'oxyde méthyl vinylique et d'anhydride maléique et/ou l'un de ses sels, des copolymères de polystyrène et d'anhydride maléique et/ou de l'un de leurs sels, du polysuccinimide et/ou l'un de ses sels, des copolymères de vinylpyrrolidone et d'acétate de vinyle et/ou un de leur sels et des alginates et/ou de l'un de leurs sels ;
b) on enrobe ou on disperse le constituant précurseur hydrophile comprenant des motifs hydrolysables dans une matière formant barrière, la matière formant barrière étant choisie parmi des huiles ou des matières grasses ou leurs produits d'hydrogénation et leurs émulsions, la gomme arabique, la cire microcristalline, la cire de polyéthylène ou un copolymère de poly(acétate de vinyle/laurate de vinyle) et
c) on mélange le constituant précurseur hydrophile enrobé ou dispersé à un élastomère,
d) comprenant, éventuellement, en outre, un stade dans lequel on prévoit un solvant ou un plastifiant de l'élastomère.

14. Procédé de préparation d'une composition de gomme à mâcher, comprenant les stades, dans lesquels
a) on se procure une base de gomme comprenant (i) au moins un constituant précurseur hydrophile comprenant un polymère ou l'un de ses sels et le polymère est choisi parmi un copolymère d'oxyde méthyl vinylique et d'anhydride maléique et/ou l'un de ses sels, des copolymères de polystyrène et d'anhydride maléique et/ou de l'un de leurs sels, du polysuccinimide et/ou l'un de ses sels, des copolymères de vinylpyrrolidone et d'acétate de vinyle et/ou de l'un de leur sels et des alginates et/ou de l'un de leurs sels ; et (ii) un élastomère, le constituant précurseur hydrophile comprenant des motifs hydrolysables étant enrobé ou dispersé dans une matière formant barrière, avant incorporation à la base de gomme, la matière formant barrière étant choisi parmi des huiles ou des matières grasses ou leurs produits d'hydrogénation et leurs émulsions, la gomme arabique, la cire microcristalline, la cire polyéthylénée ou un copolymère de poly(acétate de vinyle/laurate de vinyle) et
b) on combine la base de gomme à au moins un constituant choisi parmi un édulcorant, un aromatisant, un agent donnant une sensation et leurs combinaisons,
c) comprenant, éventuellement, en outre, un stade dans lequel on prévoit un solvant ou un plastifiant de l'élastomère.

15. Utilisation d'un constituant précurseur hydrophile, comprenant des motifs hydrolysables, le constituant précurseur hydrophile comprenant des motifs hydrolysables étant enrobé ou dispersé dans une matière formant barrière, avant incorporation à la base de gomme,
dans laquelle le constituant précurseur hydrophile comprend un polymère ou l'un de ses sels et le polymère est choisi parmi un copolymère d'oxyde méthyl vinylique et d'anhydride maléique et/ou l'un de ses sels, des copolymères de polystyrène et d'anhydride maléique et/ou de l'un de leurs sels, du polysuccinimide et/ou l'un de ses sels, des copolymères de vinylpyrrolidone et d'acétate de vinyle et/ou l'un de leur sels et des alginates et/ou de l'un de leurs sels,
et dans laquelle la matière formant barrière est choisie parmi des huiles ou des matières grasses ou leurs produits d'hydrogénation et leurs émulsions, la gomme arabique, la cire microcristalline, la cire de polyéthylène ou un copolymère de poly(acétate de vinyle/laurate de vinyle), pour prolonger la durée de vide d'une composition de gomme à mâcher.

16. Composition de gomme à mâcher, comprenant une base de gomme suivant l'une quelconque des revendications 1 à 12, dans laquelle la base de gomme ou la composition de gomme à mâcher a des propriétés accrues de dégradabilité et/ou de collage réduit, en la présence du sel du polymère comprenant des motifs hydrolysables par rapport à l'absence du sel du polymère comprenant des motifs hydrolysables.
